# EUROPÄISCHE PATENTSCHRIFT

(11) **EP 3 275 621 B1**
(45) Veröffentlichungstag und Bekanntmachung des Hinweises auf die Patenterteilung: **14.06.2023**
(21) Anmeldenummer: 17187123.9
(22) Anmeldetag: 26.11.2014
(51) Int. Cl.: B29C 49/48, B25J 11/00, B29C 49/06, B29C 49/36, B29C 49/42, B29C 49/46, B29C 49/28

(54) **BLASFORMMASCHINE MIT BLASFORMWECHSELVORRICHTUNG**
BLOW-MOULDING MACHINE WITH SYSTEM FOR CHANGING BLOW-MOULDS
MACHINE DE FORMAGE PAR SOUFFLAGE ÉQUIPÉE DE UN SYSTÈM DE REMPLACEMENT DES MOULS

(30) Priorität: 26.11.2013 DE 102013113077
(43) Veröffentlichungstag der Anmeldung: 31.01.2018
(62) Teilanmeldung aus: 14194986.7
(73) Patentinhaber: Krones AG, 93073 Neutraubling (DE)
(72) Erfinder: Blochmann, Erik, 93073 Neutraubling (DE)
(74) Vertreter: Bittner, Bernhard

(56) Entgegenhaltungen:
- EP-A2- 2 292 402
- EP-A2- 2 570 251
- WO-A1-2011/026963
- WO-A1-2013/057203
- DE-A1-102009 040 978
- FR-A1- 2 954 207
- FR-A1- 2 990 640
- US-A- 5 203 837

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik seit langem bekannt. Dabei werden erwärmte Kunststoffvorformlinge üblicherweise durch Beaufschlagung mit Druckluft zu Kunststoffbehältnissen wie Kunststoffflaschen umgeformt. Zu diesem Zweck ist üblicherweise an einem drehbaren Träger eine Vielzahl von Umformungsstationen bzw. Blasstationen angeordnet. Diese Blasstationen weisen dabei jeweils Blasformen auf, die einen Hohlraum aufweisen, innerhalb dessen die Kunststoffvorformlinge zu den Kunststoffbehältnissen umgeformt werden. Diese Blasformen weisen damit ein Negativ des herzustellenden Behältnisses auf.

Falls die Vorrichtung auf andere Behältnisse umgestellt werden soll, müssen die einzelnen Blasformen ausgewechselt werden. Im Stand der Technik werden diese Blasformen einzeln von den jeweiligen Umformungsstationen entnommen. Ein Bediener nimmt dabei die einzelnen Blasformeinrichtungen heraus und ersetzt sie durch neue Blasformeinrichtungen, welche die entsprechenden neuen Behältnisse formen sollen. Daher dauert der Wechselvorgang relativ lang und es ist auch ein Bediener notwendig. Aus dem internen Stand der Technik ist weiterhin auch die Verwendung einer Wechseleinrichtung bzw. eines Wechselroboters bekannt. Dabei ist jedoch eine derartige Wechseleinrichtung relativ kompliziert und auch kostenintensiv.

Vorrichtungen die Wechseleinrichtungen aufweisen, welche geeignet und dazu bestimmt ist, in einem Wechselbetriebmodus der Vorrichtung zumindest die Blasformeinrichtungen von deren Blasformträgern zu entfernen und/oder Blasformeinrichtungen an den Blasformträgern anzuordnen sind aus EP 292 402 A2, DE 102009040978A1, WO 2013/057203 A1 und US 5 203 837 A bekannt. EP292402A2 offenbart eine Vorrichtung nach dem Oberbegriff des Anspruchs 1 und ein Verfahren nach dem Oberbegriff des Anspruchs 9.

Der vorliegenden Erfindung liegt daher die Aufgabe zugrunde, derartige Wechseleinrichtungen effizienter zu nutzen, um sie auf diese Weise wirtschaftlich rentabler zu machen. Dies wird erfindungsgemäß durch die Gegenstände der unabhängigen Patentansprüche erreicht. Vorteilhafte Ausführungsformen und Weiterbildungen sind Gegenstand der Unteransprüche.

Die gestellte Aufgabe wird durch die Merkmale der unabhängigen Ansprüchen 1 und 9 gelöst.

Eine Vorrichtung zum Umformen von Kunststoffvorformlingen zu Kunststoffbehältnissen weist eine Transporteinrichtung auf, welche die Kunststoffvorformlinge entlang eines vorgegebenen Transportpfades transportiert. Dabei weist die Transporteinrichtung einen beweglichen und zumindest mittelbar an einem stationären Basisträger angeordneten Stationsträger auf, an dem eine Vielzahl von Umformungsstationen angeordnet ist, wobei diese Umformungsstationen jeweils Blasformeinrichtungen aufweisen, welche jeweils Hohlräume ausbilden, innerhalb derer die Kunststoffvorformlinge zu den Kunststoffbehältnissen umformbar sind. Dabei sind diese Blasformeinrichtungen jeweils an Blasformträgern angeordnet. Bevorzugt sind diese Blasformträger Bestandteil der einzelnen Umformungsstationen und sind damit bevorzugt ebenfalls mittelbar an dem Stationsträger angeordnet.

Weiter weist die Vorrichtung eine Wechseleinrichtung auf, welche geeignet und dazu bestimmt ist, in einem Wechselbetriebsmodus der Vorrichtung zumindest die Blasformeinrichtungen von deren Blasformträgern zu entfernen und/oder Blasformeinrichtungen an den Blasformträgern anzuordnen. Dabei ist diese Wechseleinrichtung weiterhin dazu geeignet und bestimmt, während eines weiteren Betriebsmodus, der sich von dem Wechselbetrieb unterscheidet, einen Behandlungsvorgang an wenigstens einem für die Vorrichtung bestimmten Arbeitselement durchzuführen. Es wäre jedoch auch denkbar, dass die Wechseleinrichtung zum Wechseln von weiteren Bauteilen, wie z.B. Reckstangen, Transfersternen und dergleichen eingesetzt wird.

Weiter handelt es sich bei der Wechseleinrichtung um eine manuelle Wechseleinrichtung. So ist erdacht, dass anstelle eines Roboters ein sogenannter Manipulator eingesetzt wird. Der Manipulator kompensiert das Eigengewicht der zu bewegenden Blasformeinrichtungen um die Bedienung zu erleichtern. Der Bediener kann den Manipulator, an dessen Ende der Formengreifer befestigt ist, führen. Ein derartiger Wechsel mittels eines Manipulators wird nicht automatisch durchgeführt bzw. ohne Bediener. Es wird darauf hingewiesen, dass die Ausgestaltung der Wechseleinrichtung als Manipulator auch unabhängig davon eingesetzt werden kann, ob die Wechseleinrichtung außerhalb des Wechselmodus noch andere Tätigkeiten durchführt.

Ein derartiger Manipulator hat gegenüber einem Roboter geringere Herstellkosten.

Auch wird darauf hingewiesen, dass die Wechseleinrichtung auch für Aufgaben eingesetzt werden, kann, welche die Umformungseinrichtung nicht unmittelbar betreffen, etwa zu Reinigungsvorgängen an Füllelementen eines Füllers.

Daneben ist üblicherweise auch kein Abgrenzungsbereich nötig, um diesen Manipulator unterzubringen. Daneben ist auch die Technik für einen derartigen Manipulator einfacher und kostengünstiger und eignet sich beispielsweise für Länder mit geringeren technischen Standards.

Damit ist erlaubt, ein derartiger Manipulator den Austausch der Blasformeinrichtung als Paket, das heißt insbesondere einschließlich sämtlicher Teile der Blasform. Damit ist auch hier ein schnelles und ergonomisches Wechseln möglich.

Im Übrigen können jedoch die weiteren Komponenten einer derartigen Wechseleinrichtung gleichbleiben, wie beispielsweise die Formen, das Magazin, die Blasstation und der Betätiger. Ein derartiger Manipulator bringt den Vorteil, dass er ohne großen Aufwand umsetzbar ist und sich insbesondere auch an Kunden richten kann, die ein schnelles Wechseln ohne eine automatische Wechseleinrichtung wünschen.

Zum Bestücken eines Magazins mit den Blasformen können beispielsweise die Blasformen als Paket einmalig von einem Bediener in entsprechende Öffnungen geschoben werden. Da ein derartiges Formenpaket einer Blasform vorzugswiese keine Griffe oder Ähnliches aufweist und die drei Bauteile (Formhälften und Boden) nicht zueinander fixiert sind, ist dies im Allgemeinen ohne geeignetes Werkzeug schwer durchzuführen. Über einen Form- und Kraftschluss wird bevorzugt ein sicheres Halten gewährleistet.

Weiter weist daher die Wechseleinrichtung eine Greifeinrichtung zum Greifen der Blasformeinrichtung auf, wobei diese Greifeinrichtung in wenigstens zwei unterschiedliche Richtungen beweglich ist. Vorteilhaft ist diese Greifeinrichtung um wenigstens drei unterschiedliche Achsen schwenkbar. Vorteilhaft ist sie um sechs Achsen schwenkbar. Bevorzugt ist die Greifeinrichtung an einem Arm angeordnet, wobei dieser Arm ebenfalls beweglich ist. Vorteilhaft kann die Greifeinrichtung von diesem Arm besonders bevorzugt automatisch getrennt werden. Dabei ist es zusätzlich möglich, dass auch Medienverbindungen automatisch getrennt werden.

Durch die Erfindung ist es möglich, dass die Wechseleinrichtung im bestimmten Betriebsmodus und insbesondere während der Produktion der Blasmaschine eine zu einem nächsten Wechselvorgang notwendige Tätigkeit ausführt, beispielsweise ein Reinigen der Blasformen oder ein Beladen des Magazins.

Bei einer weiteren vorteilhaften Ausführungsform weist die Wechseleinrichtung wenigstens eine Behandlungseinrichtung zum Behandeln des Arbeitselements auf. Dabei kann es sich beispielsweise um ein Reinigungselement handeln, welches zum Reinigen des besagten Arbeitselements dient. Dieses Reinigungselement kann beispielsweise eine Düse aufweisen, welche zum Beaufschlagen einer Oberfläche des Arbeitselements mit einem Reinigungs- und oder Sterilisationsmediums dient. Daneben kann die Behandlungseinrichtung auch eine Sterilisationseinrichtung aufweisen, etwa eine Beaufschlagungseinrichtung, welche das Arbeitselement mit einem Sterilisationsmedium beaufschlagt oder auch eine Strahlungseinrichtung, welche das Arbeitselement zu dessen Sterilisation einer Strahlung aussetzt. Bevorzugt ist daher der oben genannte Betriebsmodus ein Produktionsmodus der Vorrichtung. Hier wird damit vorgeschlagen, dass während eines Arbeitsbetriebs der Anlage, das heißt während eines Betriebs, in dem Behältnisse gefertigt werden, gleichzeitig die Wechseleinrichtung andere Tätigkeiten vornimmt.

Bei einer weiteren vorteilhaften Ausführungsform ist der Behandlungsvorgang aus einer Gruppe von Behandlungsvorgängen ausgewählt, welche Reinigungsvorgänge, Wartungsvorgänge, Sterilisationsvorgänge, Kombinationen hieraus und dergleichen enthält.

Bei einer weiteren vorteilhaften Ausführungsform ist das Arbeitselement aus einer Gruppe von Arbeitselementen ausgewählt, welche Blasformen, Greifelemente, Haltedornen zum Halten der Behältnisse, Reckstangen, Blasdüsen, Füllventile und dergleichen enthält. Bei einer weiteren bevorzugten Ausführungsform dient das besagte Arbeitselement ebenfalls zum Behandeln der Behältnisse. Damit kann es sich um eines der oben genannten Arbeitselemente handeln, welches beispielsweise das Behältnis greift oder in sonstiger Weise behandelt, wie etwa befüllt, in dessen Längsrichtung dehnt (Reckstange), oder dergleichen.

Bei einer weiteren vorteilhaften Ausführungsform ist die Behandlungseinrichtung durch die Greifeinrichtung austauschbar. Dies bedeutet, dass an dem gleichen Arm sowohl die Greifeinrichtung angeordnet sein kann, als auch die Behandlungseinrichtung. Dabei ist es möglich, dass die Greifeinrichtung durch die Behandlungseinrichtung ausgetauscht wird bzw. umgekehrt, um die jeweiligen Vorgänge durchzuführen. Mit anderen Worten ist es möglich, dass ein Formengreifer an einem Roboterarm durch eine Behandlungseinrichtung ausgetauscht wird. Es wäre jedoch möglich, dass an den Roboterarm sowohl ein Formengreifer als auch eine Behandlungseinrichtung angeordnet sind, und diese beispielsweise durch eine bestimmte Bewegung gegeneinander eingetauscht werden können. So ist es beispielsweise möglich, dass die Wechseleinrichtung eine Greifeinrichtung ablegt und an die entsprechende Schnittstelle - bevorzugt selbständig - ein Arbeitsgerät anbindet, um diese Tätigkeit zu erledigen.

Bevorzugt erfolgt eine Reinigung der Blasformeinrichtungen durch die Wechseleinrichtung.

Bei einer weiteren bevorzugten Ausführungsform setzt die Wechseleinrichtung die Formen für die Reinigung in einen zusammengesetzten Zustand in eine Reinigungsanlage.

Bei einer weiteren vorteilhaften Ausführungsform nimmt eine entsprechende Reinigungsanlage die zusammengesetzten Blasformeinrichtungen auseinander, um so eine allseitige Reinigung zu ermöglichen.

Bei einer weiteren vorteilhaften Ausführungsform ist es auch möglich, dass die Greifeinrichtung mechanisch und insbesondere ohne Bedienereingriff (bevorzugt formflüssig) mit der Wechseleinrichtung verbunden werden kann. Vorteilhaft können während bzw. bei dieser Verbindung gleichzeitig Medien, wie beispielsweise Druckluft und Steuersignale, angekoppelt werden.

Es ist weiteren möglich, dass zu einem manuellen Be- und Entladen eines Magazins mit den Blasformeinrichtungen ein Handhabungswerkzeug verwendet wird, welches nach dem Prinzip eines glatten Greifers ausgeführt ist.

Bei einer weiteren vorteilhaften Ausführungsform ist es auch möglich, dass die Wechseleinrichtung Elemente aufweist, welche beim Einlegen einer Blasform und auch bevorzugt beim Entnehmen einer Blasformeinrichtung Medien, die zur Temperierung der Blasformeinrichtung notwendig sind, bevorzugt automatisch, ankoppelt oder abkoppelt.

Dabei ist es möglich, dass die Wechseleinrichtung zum An- oder Abkuppeln dieser Medien einen Greiferkopf wechselt.

Bei einer weiteren vorteilhaften Ausführungsform wäre es auch möglich, dass während einer Einlegebewegung der Blasformeinrichtung durch die Wechseleinrichtung in die Blasformträger Medien angekuppelt bzw. abgekoppelt werden.

Dabei sind derartige Kupplungen bevorzugt so ausgerichtet, dass eine Einlege- und auch die An- und Abkoppelbewegung im Wesentlichen parallel zu einer Reckstange der Vorrichtung erfolgt. Auf diese Weise können die Ankoppel- und Abkoppelvorgänge erleichtert werden.

Bei einer weiteren vorteilhaften Ausführungsform weist die Vorrichtung eine Bedieneinrichtung zum Bedienen der Wechseleinrichtung auf. Diese Bedieneinrichtung weist vorteilhaft auch einen Touch-Bildschirm auf. Bevorzugt können diese genannten Einrichtungen von mehreren Maschinen genutzt werden und bevorzugt sind sie über eine genormte Schnittstelle aneinander angebunden.

Bei einer weiteren vorteilhaften Ausführungsform ist die Greifeinrichtung an einem um wenigstens eine vorgegebene Schwenkachse schwenkbaren Arm angeordnet. Auf diese Weise wird die Bewegungsfähigkeit der Greifeinrichtung erhöht.

Bei einer weiteren vorteilhaften Ausführungsform weist die Vorrichtung ein zumindest den Stationsträger und die Blasformeinrichtung wenigstens teilweise umgebendes Gehäuse auf und bevorzugt ist die Wechseleinrichtung außerhalb dieses Gehäuses angeordnet. Dieses Gehäuse dient insbesondere auch als Schutz des Bedieners. Damit die Wechseleinrichtung auch innerhalb des Betriebsmodus andere Tätigkeiten ausführen kann, ist jedoch die Wechseleinrichtung bevorzugt außerhalb dieses Gehäuses angeordnet. Bevorzugt weist dabei die Wechseleinrichtung Öffnungs- und Schließeinrichtungen auf, welche dieses Gehäuse öffnen können, insbesondere um nach einem Arbeitsbetrieb Blasformen auszuwechseln. Damit ist es bevorzugt möglich, dass die Wechseleinrichtung den Maschinenschutz der Blasmaschine, insbesondere für den Formwechselgang, öffnet und schließt. Bevorzugt weist dabei dieser Schutzbereich ein Öffnungselement auf, welches von der Greifeinrichtung der Wechseleinrichtung zum Öffnen und Schließen des Schutzbereichs gegriffen werden kann.

So kann beispielsweise an einer Tür des Schutzbereichs ein Gegenstück angeordnet sein, welches von der Greifeinrichtung gegriffen werden kann.

Bei einer weiteren vorteilhaften Ausführungsform weist die Vorrichtung auch einen Schutzbereich für die Wechseleinrichtung auf. Dieser Schutzbereich kann dabei die Wechseleinrichtung während des Blasformwechsels zumindest teilweise umgeben und kann die Wechseleinrichtung auch außerhalb des Wechselmodus zumindest zeitweise umgeben.

Die vorliegende Erfindung ist weiterhin auf ein Verfahren zum Betreiben einer Umformungseinrichtung zum Umformen von Kunststoffvorformlingen zu Kunststoffbehältnissen gerichtet, wobei in einem Arbeitsbetrieb der Vorrichtung die Kunststoffvorformlinge mittels einer Vielzahl von Umformungsstationen entlang eines vorgegebenen Transportpfads transportiert werden und durch Beaufschlagung mit einem fließfähigen und insbesondere gasförmigen Medium zu den Kunststoffbehältnissen expandiert werden. Weiterhin werden zum Expandieren der Kunststoffvorformlinge Blasformeinrichtungen verwendet, in deren Inneren die Kunststoffvorformlinge zu den Kunststoffbehältnissen expandiert werden. Weiterhin wird in einem Wechselbetrieb der Vorrichtung zumindest eine der Blasformeinrichtungen der Vorrichtung entnommen und/oder eine der Blasformeinrichtungen an einem Blasformträger der Vorrichtung angeordnet.

Dabei wird zum Wechseln der Blasformeinrichtungen eine Wechseleinrichtung verwendet, welche eine Greifeinrichtung zum Greifen der Blasformeinrichtung aufweist, wobei diese Wechseleinrichtung in einem weiteren Betriebsmodus einen weiteren Behandlungsvorgang durchführt. Vorteilhaft handelt es sich bei diesem weiteren Betriebsmodus um einen Arbeitsbetrieb der Vorrichtung, in dem auch Kunststoffvorformlinge zu Kunststoffbehältnissen expandiert werden.

Zusätzlich oder alternativ wäre es auch möglich, dass die Wechseleinrichtung als manuelle Wechseleinrichtung, insbesondere als Manipulator, ausgeführt ist. Mittels eines derartigen Manipulators kann der Benutzer, wie oben erwähnt, auch manuell Wechselvorgänge durchführen, wobei er hierzu jedoch deutlich geringere Kräfte ausführen muss, als für einen rein manuellen Wechselvorgang.

Bei einer weiteren vorteilhaften Ausführungsform ist die Wechseleinrichtung in der oben beschriebenen Weise ausgeführt, wobei beispielsweise bevorzugt zumindest zeitweise eine Greifeinrichtung der Wechseleinrichtung durch eine Behandlungseinrichtung zum Behandeln eingewechselt wird. Vorteilhaft erfolgt dieses Einwechseln ebenfalls automatisch. Bevorzugt handelt es sich, wie oben erwähnt, bei dem Behandlungsvorgang um einen Reinigungs- und/oder Sterilisationsvorgang. Dabei kann, wie oben erwähnt, nicht nur eine Blasformeinrichtung behandelt werden, sondern auch andere Elemente wie etwa Reckstangen, Blasdüsen, Fülleinrichtungen und dergleichen.

Bei einer weiteren vorteilhaften Ausführungsform ist die Greifeinrichtung an einem um eine vorgegebene erste Schwenkachse schwenkbaren Arm angeordnet. Dieser Arm wird im Folgenden aufgrund seiner Anordnung in der Wechseleinrichtung auch als zweiter Arm bezeichnet. Dabei kann die Greifeinrichtung selbst wiederum schwenkbar bzw. drehbar an diesem Arm angeordnet sein.

Bei einer weiteren vorteilhaften Ausführungsform ist der schwenkbare (zweite) Arm an einem weiteren um eine vorgegebene zweite Schwenkachse schwenkbaren Arm angeordnet. Dieser weitere Arm wird im Folgenden auch aufgrund seiner Anordnung in der Wechseleinrichtung als erster Arm bezeichnet. Dabei ist die erste Schwenkachse vorteilhaft nicht parallel zu der zweiten Schwenkachse und besonders bevorzugt windschief im mathematischen Sinne. Bereits durch diese beiden Achsen können zwei Freiheitsgrade der Bewegung der Greifeinrichtung erreicht werden. Vorteilhaft ist die Greifeinrichtung schwenkbar an dem zweiten Arm angeordnet. Durch diese schwenkbare Anordnung wird ein weiterer Freiheitsgrad in der Bewegung ermöglicht. Vorteilhaft ist die Greifeinrichtung um zwei Achsen bezüglich des zweiten Arms schwenkbar, beispielsweise um eine Achse, welche in der Richtung dieses Arms verläuft und auch um eine hierzu senkrechte Achse.

Vorteilhaft ist die Greifeinrichtung damit schwenkbar bezüglich wenigstens zwei zueinander senkrechten Achsen an dem ersten Arm angeordnet.

Bevorzugt ist die Greifeinrichtung schwenkbar bezüglich wenigstens vier Achsen, bevorzugt schwenkbar bezüglich wenigstens fünf Schwenkachsen und bevorzugt schwenkbar bezüglich wenigstens 6 Schwenkachsen angeordnet.

Bevorzugt ist wenigstens eine dieser (geometrischen Schwenkachsen ortsfest. Bevorzugt ist diese ortsfeste Schwenkachse vertikal ausgerichtet. Bevorzugt ist wenigstens eine Achse stets, d.h. unabhängig von einer Position der Wechseleinrichtung und/oder der Greifeinrichtung in einer raumfesten Ebene angeordnet. Diese raumfeste Ebene ist dabei bevorzugt eine horizontale Ebene. Bevorzugt sind wenigstens zwei Achsen stets, d.h. unabhängig von einer Position der Wechseleinrichtung und/oder der Greifeinrichtung stets in einer raumfesten Ebene angeordnet.

Bevorzugt ist wenigstens ein Paar von Achsen vorhanden, welche stets, d.h. unabhängig von einer Position der Wechseleinrichtung und/oder der Greifeinrichtung senkrecht zueinander stehen. Bevorzugt ist bezüglich dieser beiden Schwenkachsen der erste Arm gegenüber einem (insbesondere stationären) Träger bewegbar.

Bevorzugt ist wenigstens ein weiteres Paar von Achsen vorhanden, welche stets, d.h. unabhängig von einer Position der Wechseleinrichtung und/oder der Greifeinrichtung senkrecht zueinander stehen. Bevorzugt ist bezüglich dieser beiden Schwenkachsen der zweite Arm gegenüber dem ersten Arm bewegbar.

Bevorzugt ist wenigstens ein weiteres Paar von Achsen vorhanden, welche stets, d.h. unabhängig von einer Position der Wechseleinrichtung und/oder der Greifeinrichtung senkrecht zueinander stehen. Bevorzugt ist bezüglich dieser beiden Schwenkachsen die Greifeinrichtung gegenüber dem zweiten Arm bewegbar.

Die hier beschriebene Anordnung der (geometrischen) Schwenkachsen eignet sich in besonderer Weise um eine hohe Bewegungsfreiheit der Greifeinrichtung zu ermöglichen.

Bevorzugt sind wenigstens zwei Schwenkachsen stets, d.h. unabhängig von einer Position der Wechseleinrichtung und/oder der Greifeinrichtung parallel zueinander
Bei einer weiteren vorteilhaften Ausführungsform weist die Greifeinrichtung ein Eingriffsmittel auf, um wenigstens einen an der Blasformeinrichtung angeordneten Vorsprung zu greifen. Vorteilhaft weist die Greifeinrichtung zwei Eingriffsmittel auf, um zwei an der Blasformeinrichtung angeordnete Vorsprünge zu greifen. Dabei kann an zwei Blasformteilen jeweils ein solcher Vorsprung angeordnet sein und die Greifeinrichtung kann diesen während des Transports hintergreifen, um so die Blasformeinrichtung in ihrer Gesamtheit zusammenhalten zu können.

Bei einer weiteren vorteilhaften Ausführungsform ist der zweite Arm bezüglich des ersten Arms um wenigstens zwei Schwenkachsen schwenkbar. Vorteilhaft handelt es sich hierbei um zueinander senkrechte Schwenkachsen.

Bei einer weiteren vorteilhaften Ausführungsform ist die Greifeinrichtung form- und/oder kraftschlüssig mit der Blasformeinrichtung verbindbar. Auf diese Weise kann ein sicheres Greifen und Transportieren der Blasformeinrichtungen mittels der Wechseleinrichtung ermöglicht werden, wobei auch ein Transportieren mit höheren Geschwindigkeiten möglich ist.

Bei einer weiteren vorteilhaften Ausführungsform weist die Greifeinrichtung ein passives Greifelement auf. Hierunter wird insbesondere verstanden, dass ein Halten der Blasformeinrichtung nicht durch eine aktive Greifbewegung des Greifelements erfolgt, etwa durch eine Klammerbewegung, sondern lediglich durch eine korrekte Positionierung der des Greifelements bzw. der Greifeinrichtung gegenüber den zu transportierenden Blasformeinrichtungen. So kann insbesondere ein Element der Greifeinrichtung einen Abschnitt der Blasformeinrichtung hintergreifen.

Daneben ist es auch möglich, dass die Greifeinrichtung ein magnetisches bzw. magnetisierbares Element aufweist, um die Blasformeinrichtung zu halten. So könnte die Greifeinrichtung etwa einen Elektromagneten aufweisen, der aktivierbar ist, sobald sich die Greifeinrichtung in einer vorgegebenen Position gegenüber der Blasformeinrichtung befindet. Auch könnte durch die Greifeinrichtung ein magnetischer Halt zwischen Teilen der Blasformeinrichtung ausgelöst werden.

Bei einer weiteren vorteilhaften Ausführungsform weist die Wechseleinrichtung eine Steuerungseinrichtung auf, welche eine Entfernung der Blasformeinrichtung von den Blasformträgern und/oder eine Anordnung der Blasformeinrichtung an den Blasformträgern sowohl kraftals auch weggesteuert durchführt. Dabei können Erfassungseinrichtungen vorgesehen sein, welche eine Bewegung, insbesondere der Greifeinrichtung, erfassen und es können auch Erfassungseinrichtungen zum Messen von Kräften vorgesehen sein.

Durch diese Steuerung ist es auch möglich, einen oder mehrere Referenzpunkte an der Blasstation und/oder dem Magazin zu definieren, die angefahren werden können. Auf diese Weise kann auch die exakte geometrische Lage der Blasformeinrichtung zu jedem Zeitpunkt des Transports bestimmt werden. Weiterhin ist es bevorzugt, dass die Greifeinrichtung in mehreren Freiheitsgraden, zum Beispiel in eine X-, Y- und Z-Richtung auslenkbar ist, insbesondere, um Ungenauigkeiten einer Positionierung zu egalisieren. Dabei wäre es jedoch auch möglich, dass einer oder mehrere dieser Freiheitsgrade elektromechanisch blockiert werden können. Auf diese Weise kann ein schnellerer Arbeitsbetrieb der Vorrichtung erreicht werden.

Vorteilhaft ist eine Erfassungseinrichtung vorgesehen, welche die Position bzw. eine Auslenkung bezüglich dieser Freiheitsgrade erfassen kann, bevorzugt, indem sie diese beispielsweise elektrisch abfragt.

Bei einer weiteren vorteilhaften Ausführungsform weist die Greifeinrichtung aktive Elemente auf, welche einen Form- und Kraftschluss mit der Blasformeinrichtung herstellen. Dabei ist es möglich, dass die Greifeinrichtung eine formschlüssige Verbindung zwischen den beiden Seitenteilen der Blasformeinrichtung herstellt und weiterhin bevorzugt eine kraftschlüssige Verbindung zwischen den besagten Blasformhälften und der Bodenform hergestellt wird. Diese zweite Verbindung mit der Bodenform kann dabei über entsprechende Eingriffselemente der Seitenteile und/oder der Bodenform erreicht werden.

Bei einer weiteren vorteilhaften Ausführungsform weist die Vorrichtung, insbesondere die Greifeinrichtung Zentrierelemente auf, um eine exakte Positionierung der Greifeinrichtung an der Blasformeinrichtung bzw. an der Umformungsstation zu ermöglichen. Diese Zentrierelemente können dabei Einführschrägen, beispielsweise konische Einführschrägen, aufweisen, mit denen die Greifeinrichtung beim Wechselvorgang in korrespondierende Elemente an der Umformungsstation eingreift oder diese korrespondierenden Elemente kontaktiert. Vorteilhaft sind diese korrespondierenden Elemente an einem Formträgerhalter angeordnet. Auf diese Weise kann die Greifeinrichtung gegenüber der zu transportierenden Blasformeinrichtung positioniert werden.

Die vorliegende Offenbarung ist weiterhin auf ein Verfahren zum Betreiben einer Umformungseinrichtung zum Umformen von Kunststoffvorformlingen zu Kunststoffbehältnissen gerichtet. Dabei werden in einem Arbeitsbetrieb der Vorrichtung die Kunststoffvorformlinge mittels einer Vielzahl von Umformungsstationen entlang eines vorgegebenen Transportpfades transportiert und durch Beaufschlagung mit einem fließfähigen und insbesondere mit einem gasförmigen Medium zu den Kunststoffbehältnissen expandiert. Weiterhin werden zum Expandieren der Kunststoffvorformlinge Blasformeinrichtungen verwendet, in deren Inneren die Kunststoffvorformlinge zu den Kunststoffbehältnissen expandiert werden. Weiterhin wird in einem Wechselbetrieb zumindest eine der Blasformeinrichtungen der Vorrichtung entnommen und/oder eine der Blasformeinrichtungen an einen Blasformträger der Vorrichtung angeordnet.

Bevorzugt wird zum Wechseln der Blasformeinrichtungen eine bevorzugt automatisch arbeitende Wechseleinrichtung verwendet, welche eine Greifeinrichtung zum Greifen der Blasformeinrichtung aufweist, wobei diese Greifeinrichtung in wenigstens zwei unterschiedliche Richtungen bewegbar ist. Bevorzugt ist die Greifeinrichtung bezüglich wenigstens dreier, bevorzugt bezüglich wenigstens vierer Schwenkachsen schwenkbar.

Bevorzugt wird eine Wechseleinrichtung der oben beschriebenen Art verwendet.

Bevorzugt weist diese Wechseleinrichtung wenigstens einen schwenkbaren Wechselarm auf und ist wenigstens mittelbar an dem Basisträger angeordnet. Es wird daher vorgeschlagen, eine Wechseleinrichtung direkt im Bereich der Vorrichtung zum Umformen anzuordnen.

Unter einer wesentlich mittelbaren Anordnung wird dabei verstanden, dass die Wechseleinrichtung direkt an dem Basisträger angeordnet sein kann, es aber auch denkbar ist, dass die Wechseleinrichtung an einem weiteren Element angeordnet ist, etwa einem Zwischenträger, der wiederum wiederrum an dem Basisträger angeordnet ist.

Es wird damit eine Integration der Wechseleinrichtung in die Maschine vorgeschlagen. Vorteilhaft ist die Blasformeinrichtung mehrteilig ausgebildet und weist zumindest zwei Seitenteile und ein Bodenteil auf. Im Betrieb bilden diese drei Teile den besagten Hohlraum zum Expandieren der Kunststoffvorformlinge aus. Vorteilhaft sind wenigstens zwei Teile und besonders bevorzugt alle drei Teile dieser Blasformeinrichtung miteinander verriegelbar, sodass die Blasform in ihrer Gesamtheit aus der Maschine bzw. von dem Blasformträger entfernt werden kann. Der Blasformträger ist damit zur Aufnahme unterschiedlicher Blasformeinrichtungen geeignet. Dabei wäre es möglich, dass die Blasformeinrichtung selbst noch mittels Trägerschalen an dem Blasformträger angeordnet ist.

Vorteilhaft sind die Blasformträger bezüglich einander bewegbar und insbesondere schwenkbar. Dabei können in einem Arbeitsbetrieb die Blasformträger um einen vorgegebenen Schwenkwinkel auseinandergeschwenkt werden, um Kunststoffvorformlinge einzubringen und/oder um gefertigte Behältnisse zu entnehmen. Dabei sind bevorzugt für den Wechselbetrieb größere Öffnungswinkel möglich.

Bei einer weiteren vorteilhaften Ausführungsform weisen die Umformungsstationen jeweils Reckstangen auf, die im Betrieb in die Kunststoffvorformlinge einführbar sind, um diese in deren Längsrichtung zu dehnen. Vorteilhaft weisen die einzelnen Umformungseinrichtungen auch Beaufschlagungseinrichtungen auf, welche insbesondere Blasdüsen aufweisen, welche im Betrieb die Kunststoffvorformlinge mit einem fließfähigen und insbesondere einem gasförmigen Medium beaufschlagen. Es wäre dabei möglich, dass auch andere Teile der Umformungsstationen ausgewechselt werden, wie insbesondere die besagte Beaufschlagungseinrichtung bzw. Blasdüsen und/oder die Reckstangen.

Vorteilhaft handelt es sich bei dem Stationsträger um einen drehbaren Träger, wie insbesondere um ein Blasrad. Die einzelnen Umformungsstationen sind bevorzugt an einem Außenumfang dieses drehbaren Trägers angeordnet. Damit werden die Umformungsstationen im Arbeitsbetrieb entlang eines kreisförmigen Pfades bewegt.

Vorteilhaft weist die Vorrichtung eine Antriebseinrichtung zum Bewegen des Stationsträgers auf und diese Antriebseinrichtung ermöglicht dabei bevorzugt sowohl eine kontinuierliche Bewegung des Stationsträgers als auch eine getaktete Bewegung des Stationsträgers, welche damit zwischen Bewegungen jeweils Ruhephasen aufweist. Vorteilhaft ist dabei diese Bewegungsart in Abhängigkeit von einem Betriebsmodus einstellbar. In einem Arbeitsbetrieb wird der Stationsträger bevorzugt kontinuierlich bewegt und in einem Wechselbetrieb bevorzugt getaktet. Dabei kann eine Bewegung dieses Stationsträgers auch auf Bewegungen der Wechseleinrichtungen abgestimmt sein. Vorteilhaft handelt es sich beim dem Stationsträger um ein Blasrad.

Durch die erfindungsgemäße Vorgehensweise wird ein vollautomatischer Wechselvorgang, ermöglicht. Vorteilhaft kann dabei die Blasformeinrichtung, insbesondere in einem Wechselbetrieb, vollautomatisch verriegelt werden, bzw. die einzelnen Elemente der Blasformeinrichtungen aneinander befestigt werden. Die Wechseleinrichtung ist damit bevorzugt geeignet, die vollständige Blasformeinrichtung, das heißt deren mindestens drei Bestandteile im Verbund zu greifen bzw. zu entnehmen. Vorteilhaft kann nach dem Greifen der Blasformeinrichtung eine entsprechende Formverriegelung deaktiviert werden. In einem weiteren Schritt kann die Wechseleinrichtung den Formverbund in einer Lagervorrichtung, wie einem Magazin, absetzen. In der Folge kann die Wechseleinrichtung einen neuen Formverbund bzw. eine neue Blasformeinrichtung in einen Blasformträger einsetzen und (bevorzugt) die neue Blasformeinrichtung mit dem Blasformträger verriegeln.

Anschließend kann der Stationsträger um eine Position weitergefahren werden, um eine weitere Blasformeinrichtung auszuwechseln. Damit kann insbesondere ein vollautomatischer Vorgang durchgeführt werden, bei dem kein Benutzer notwendig ist.

Bei einer weiteren vorteilhaften Ausführungsform weist die Vorrichtung ein Gehäuse auf, welche zumindest den Stationsträger in dessen Umfangsrichtung umgibt. Dabei kann im Prinzip die vollständige Blasformeinrichtung und/oder die Wechseleinrichtung innerhalb eines Gehäuses angeordnet sein, wobei dieses Gehäuse auch eine Schutzfunktion aufweisen kann.

Die Wechseleinrichtung wird bevorzugt direkt in die Maschine integriert und kann beispielsweise an einem Grundgestell angebaut sein. Bei einer weiteren vorteilhaften Ausführungsform ist die Wechseleinrichtung in ihrer Gesamtheit in einem von dem Gehäuse umgebenden Raum verlagerbar. In diesem Falle ist es möglich, dass in einem Betriebszustand die Wechseleinrichtung vollständig in die Maschine integriert ist und so beispielsweise von au-βen noch nicht einmal sichtbar ist und insbesondere den Betrieb der Umformungseinrichtung nicht stört. Dabei ist es möglich, dass eine Verkleidung des Gehäuses auch als Schutzeinrichtung für die Wechseleinrichtung dient. Im Arbeitsbetrieb ist damit bevorzugt die besagte Wechseleinrichtung innerhalb des Gehäuses angeordnet.

Im Wechselbetrieb wird auch die Wechseleinrichtung aktiv, sodass diejenigen Bereiche, deren Betreten für den Benutzer unter Umständen gefährlich sein könnte, erweitert werden müssen. So ist es denkbar, dass im Rahmen des Wechselbetriebes geänderte Schutzbereiche auch für den Benutzer gesperrt oder zumindest erkennbar gemacht werden.

Dabei wäre es möglich, dass im Rahmen des Wechselbetriebes zusätzliche Schutzelemente betätigt werden, wodurch die Sicherheit des Bedieners erhöht werden kann.

Bei einer weiteren vorteilhaften Ausführungsform weist die Wechseleinrichtung wenigstens eine Greifeinrichtung zum Greifen der Blasformeinrichtungen auf. Dabei kann es sich um eine Greifeinrichtung handeln, welche die Blasformeinrichtung in ihrer Gesamtheit greift. Dabei wäre es möglich, dass an der Greifeinrichtung benötigte Medien und/oder elektrische Signale durch Bereiche der Wechseleinrichtungen, wie beispielsweise Achsen oder Schwenkarme, geführt werden. Auch wäre es möglich, dass derartige Verbindungen über Drehdurchführungen, beispielsweise an den Achsen der Wechseleinrichtungen geführt werden.

Bei einer weiteren vorteilhaften Ausführungsform weist die Wechseleinrichtung wenigstens eine Erfassungseinrichtung zum Erfassen wenigstens einer auf ein Element der Wechseleinrichtung wirkenden Kraft auf. So können insbesondere äußere Kräfte, die beispielsweise auf einen Wechselarm, der die Blasformeinrichtungen entnimmt, wirken. Allgemein handelt es sich um eine Erfassungseinrichtung, welche auf physikalische Einwirkungen reagieren kann bzw. derartige Einwirkungen erfassen kann, wie etwa ein Drehmoment, Kräfte, Impulse oder dergleichen. Auf diese Weise ist eine schnelle Reaktion der Wechseleinrichtung möglich.

Bevorzugt bewegt sich jedoch die Wechseleinrichtung innerhalb eines begrenzten Arbeitsbereiches. Dies bedeutet, dass insbesondere auch die Entnahme- und Zuführbewegung für die Blasformeinrichtungen in einem begrenzten Arbeitsbereich stattfindet. In Reaktion auf die oben erwähnten äußeren Kräfte kann eine Position von diesem Arbeitsbereich abweichen. Ansonsten wird jedoch bevorzugt dieser definierte Arbeitsbereich eingehalten, insbesondere während eines Formenwechsels.

Dabei ist es vorteilhaft möglich, dass der Arbeitsbereich der Wechseleinrichtung sicherheitstechnisch und insbesondere mechanisch begrenzt wird. Eine derartige Begrenzung wäre durch unterschiedliche Maßnahmen möglich, etwa durch Lichtschranken, welche eine falsche bzw. zu weit gehende Bewegung der Wechseleinrichtung erfassen und in der Folge entweder eine Rückführung oder einen Notstopp der Wechseleinrichtung bewirken. Daneben wäre jedoch auch eine Begrenzung des Arbeitsbereiches durch mechanische Elemente, wie beispielsweise Anschläge, möglich.

Daneben ist es auch bevorzugt möglich, dass ein Arbeitsbereich der Wechseleinrichtung sicherheitstechnisch und elektrisch bzw. auch steuerungsseitig überprüft wird. Dabei ist es insbesondere möglich, dass dieser Arbeitsbereich abweichend von einem maximalen möglichen Arbeitsbereich (weiter) eingeschränkt wird.

Bei einer weiteren vorteilhaften Ausführungsform weist die Wechseleinrichtung eine serielle und/oder parallele Kinematik mit wenigstens drei Bewegungsachsen auf. Vorteilhaft weist die Wechseleinrichtung eine serielle und/oder parallele Kinematik mit mehr als drei Bewegungsachsen auf. Auf diese Weise wird eine sehr hohe Bewegungsfreiheit der Wechseleinrichtung bzw. eines Greifelements der Wechseleinrichtung ermöglicht. Die Blasformeinrichtungen können daher in Abhängigkeit von den tatsächlichen Gegebenheiten in unterschiedlicher Weise auch von ihren Blasformträgern entnommen bzw. diesen zugeführt werden.

Dabei ist es möglich, dass die Vorrichtung eine Bedieneinrichtung aufweist, um die Wechseleinrichtung bzw. den Greifarm zu steuern. Dabei kann es sich beispielsweise um ein Handbediengerät handeln. Es wäre jedoch auch möglich, dass eine Steuerung der Wechseleinrichtung über Geräte wie beispielsweise Smartphones steuerbar ist.

Eine Steuerung durch ein derartiges Bediengerät ist dabei insbesondere im Einrichtbetrieb, das heißt beim Zuführen von neuen Blasformeinrichtungen vorteilhaft.

Die vorliegende Offenbarung ist weiterhin auf ein Verfahren zum Betreiben einer Umformungseinrichtung zum Umformen von Kunststoffvorformlingen zu Kunststoffbehältnissen gerichtet. Dabei werden in einem Arbeitsbetrieb der Vorrichtung die Kunststoffvorformlinge mittels einer Vielzahl von Umformungsstationen entlang eines vorgegebenen Transportpfades transportiert und durch Beaufschlagung mit einem fließfähigen und insbesondere gasförmigen Medium zu den Kunststoffbehältnissen expandiert. Weiterhin werden zum Expandieren der Kunststoffvorformlinge Blasformeinrichtungen verwendet, in deren Inneren die Kunststoffvorformlinge zu den Kunststoffbehältnissen expandiert werden. Dabei wird in einem Wechselbetrieb zumindest eine der Blasformeinrichtungen der Vorrichtung entnommen und/oder eine der Blasformeinrichtungen an einen Blasformträger der Vorrichtung angeordnet.

Bevorzugt wird zum Wechseln der Blasformeinrichtungen eine an der Vorrichtung angeordnete Wechseleinrichtung verwendet.

Bei einem weiteren bevorzugten Verfahren werden die Umformungsstationen in dem Arbeitsbetrieb entlang eines umlaufenden Transportpfades transportiert und in dem Wechselbetrieb werden die Blasformeinrichtungen in einer vorgegebenen festgelegten Position der jeweiligen Umformungsstation, deren Blasformeinrichtung entnommen werden soll, bezüglich des umlaufenden Transportpfades entnommen. Es wird daher vorgeschlagen, dass im Arbeitsbetrieb die Umformungsstationen umlaufen, wie dies an sich im Stand der Technik bekannt ist. Für den einzelnen Wechselvorgang wird jedoch vorgeschlagen, dass dieser an wenigstens einer genau bestimmten Station erfolgt, die insbesondere auch in einem Wirkungsbereich der Wechseleinrichtung liegt. Mit anderen Worten ist vorteilhaft die Entnahmeposition an einem Blasrad immer identisch. Dabei ist es möglich, dass sich die Wechseleinrichtung während der Produktion oder des Arbeitsbetriebes derart ausrichtet, dass sie innerhalb eines Blasmaschinenschutzbereiches bzw. Gehäuses angeordnet werden kann.

Es ist aber möglich, dass die Positionen der Aufnahmestellen der Blasformeinrichtungen an der Aufnahmeeinrichtung bzw. dem Magazin relativ zu dessen Koordinatensystem unabhängig von der Aufnahmeeinrichtung unverändert bleiben und/oder die Positionen der Aufnahmestellen sich in äquidistanten Abständen zu diesem Koordinatensystem befinden. Dabei ist es möglich, dass eine Anzeigeeinrichtung, wie insbesondere ein Eingabebildschirm der Wechseleinrichtung vorgesehen ist. Über diesen können bestimmte Werte der Koordinatensysteme, insbesondere die X-, Y- und Z-Werte der Koordinatensysteme verändert werden. Daneben kann bevorzugt an der Wechseleinrichtung eine weitere Eingabeeinrichtung wie ein Eingabebildschirm angeordnet sein, der bevorzugt mit einer Eingabeeinrichtung der Blasformmaschine interagiert.

Zum Entnehmen und Zuführen der Blasformeinrichtungen sind mehrere Möglichkeiten denkbar.

So wäre es denkbar, dass zunächst alle Blasformeinrichtungen aus den einzelnen Formträgern, das heißt den einzelnen Umformungsstationen entnommen werden und in ein leeres Magazin bzw. Lagersystem eingegeben werden. Anschließend wird dieses Lagersystem mit den Altformen durch ein volles Lagersystem mit neuen einzuwechselnden Blasformeinrichtungen ersetzt. Anschließend werden alle Neuformen in die Blasformträger eingegeben. Der Wechsel der Lagersysteme kann dabei beispielsweise mittels Hubwagen oder mittels Drehtischen erfolgen, etwa in der Art eines Palettenwechsels bei Werkzeugmaschinen. In diesem Falle wird der Blasformträger für einen vollständigen Wechsel vorteilhaft zwei vollständige Umdrehungen durchführen.

Bei einem weiteren möglichen Wechselvorgang enthält ein Magazin eine Leerstelle. Dabei wird zunächst eine Neuform aus einem Formplatz in diese Leerstelle gestellt. Anschließend wird eine Altform aus dem Formträger in den besagten Formplatz gestellt. In einem weiteren Schritt wird eine Neuform aus dem Magazin in den Formträger übergeben. Anschließend wird eine zweite Neuform in die Leerstelle gesetzt und so weiter, bis der gesamte Wechsel vollzogen ist. Durch das Zwischenlagern in einer Leerstelle wird gewährleistet, dass eine bestimmte Blasformeinrichtung wieder an einem bestimmten Lagerplatz bzw. einem bestimmten Blasformträger übergeben wird. Vorteilhaft befindet sich dabei die besagte Leerstelle räumlich zwischen dem Blasformträger und dem Lagersystem und bevorzugt auf bzw. in dem Lagersystem selbst.

Vorteilhaft erfolgt die Entnahme der Blasformeinrichtung und/oder die Zuführung neuer Blasformeinrichtungen in einem Taktbetrieb. Dies bedeutet, dass der einzelne Wechsel der Blasformeinrichtung erfolgt, während die Umformungsstation stillsteht. Dabei kann die Wechseleinrichtung eine bestimmte Blasformeinrichtung in einem Magazin ablegen, und währenddessen kann die Umformungseinrichtung selbst um eine Station weiter fahren, das heißt das Blasrad dreht sich um eine Position weiter. Zum Einsetzen und Entnehmen der Blasformeinrichtungen wird vorteilhaft eine relativ zu dem Transportpfad radiale Richtung verwendet. Wie oben erwähnt, ist es auch möglich, die Blasformeinrichtung in einer Zwischenstation zu parken bzw. abzustellen. Hierfür kann bevorzugt eine vertikale Bewegung verwendet werden.

Verfahrensseitig ist es möglich, dass die Greifeinrichtung der Wechseleinrichtung die Blasformeinrichtung formschlüssig greift, um diese zu transportieren bzw. aus der Vorrichtung zu entnehmen. Vorteilhaft greift die Greifeinrichtung der Wechseleinrichtung kraftschlüssig in die Blasformeinrichtung ein.

Bei einer weiteren vorteilhaften Ausführungsform erfolgt die Entnahme und/oder das Ablegen der Blasformeinrichtung weg- und/oder kraftgesteuert und bevorzugt sowohl weg- als auch kraftgesteuert.

Im Rahmen der Steuerung ist es möglich, dass die Wechseleinrichtung wenigstens einen definierten Referenzpunkt an der Umformungsstation bzw. der Aufnahme- oder den Blasformträgern anfährt und/oder bevorzugt auch wenigstens einen definierten Referenzpunkt an einem Ablageort, wie beispielsweise einem Magazin. Auf diese Weise können die besagten Punkte in die Steuerung der Wechseleinrichtung übertragen werden, wodurch die exakten Lagen der Formaufnahme bzw. des Blasformträgers und auch des Magazins bzw. der Aufbewahrungseinrichtung ermittelt werden können. Bevorzugt ist es dabei möglich, dass die besagten Referenzpunkte nach jedem Austausch einer Magazinvorrichtung angefahren werden oder auch im Falle von Störungen, wie beispielsweise Spannungsausfällen, angefahren werden, um so in die Steuerung übertragen zu werden.

Dabei ist es möglich, dass die so ermittelten Referenzpunkte abgespeichert werden und/oder mit Referenzpunkten, welche in der Steuerung bzw. einer Speicherungseinrichtung der Steuerung hinterlegt sind, abgeglichen werden. Falls zwischen dem ermittelten Referenzpunkt und dem bereits abgespeicherten Referenzpunkt eine Abweichung auftritt, die insbesondere über ein vorbestimmtes Maß hinaus geht, kann eine Fehlermeldung bzw. ein Hinweis erzeugt werden.

Bei einer weiteren vorteilhaften Ausführungsform weist die Wechseleinrichtung eine Bildaufnahmeeinrichtung, wie etwa eine Kamera oder dergleichen, auf. Mithilfe dieser Kameraeinrichtung ist es möglich, die genauen Aufnahme- bzw. Ablagepunkte für die Blasformeinrichtungen zu erfassen.

In diesem Zusammenhang ist es denkbar, dass die Blasformeinrichtungen und/oder der Blasformträger und/oder die Magazineinrichtung jeweils eine Kennzeichnung enthalten, um eine Zuordnung zwischen den Blasformeinrichtungen und der jeweiligen Blasstation zu gewährleisten. Auf diese Weise kann sichergestellt werden, dass eine bestimmte Blasformeinrichtung, die von einer bestimmten Umformungsstation entnommen wurde, bei einem weiteren Wechsel auch wieder der gleichen Umformungsstation zugeordnet wird. So wäre es möglich, dass jedem Aufnahmemagazin eine einzelne Kennung zugeordnet ist.

Diese Kennzeichnungen können dabei beispielsweise Stichcodes, QR-Codes, RFID-Tags und dergleichen sein. Vorteilhaft ist es möglich, dass diese Kennzeichnung berührungslos abgefragt wird.

Bei einem weiteren Verfahren ist es auch denkbar, dass die jeweiligen Kennzeichnungen nach jedem Wechsel der Magazineinrichtung oder auch bei Ausfällen der Maschine erneut eingelesen werden. Auf diese Weise kann eine sichere Zuordnung auch unter Ausnahmebedingungen gewährleistet werden.

Im Folgenden wird noch eine Aufnahmeeinrichtung bzw. ein Magazin für die Blasformeinrichtungen beschrieben. Diese Aufnahmeeinrichtung kann für einen Formwechsel an einer geeigneten Position angeordnet werden, etwa neben der Umformungseinrichtung. Dabei kann die Magazin- bzw. Aufnahmevorrichtung Einführbereiche aufweisen, über welche die Blasformeinrichtungen in das Magazin bzw. die Aufnahmeeinrichtungen abgelegt werden können. Diese Einführbereiche können dabei konisch ausgeführt sein, um ein sicheres Einführen der Blasformeinrichtungen zu ermöglichen. Vorteilhaft wird dabei die Blasformeinrichtung bzw. das Formenpaket im Wesentlichen vertikal in das Magazin eingeführt. Besonders bevorzugt kann die Blasformeinrichtung in zylindrischen Öffnungen des Magazins bzw. der Aufnahmeeinrichtung abgelegt werden. Das Magazin selbst kann - insbesondere formschlüssig - in dieser Aufnahmeeinrichtung angeordnet sein.

Bei einer bevorzugten Ausführungsform kann diese Magazinvorrichtung dabei elastische Elemente, insbesondere im Bereich der zylindrischen Öffnungen, zum Einführen der Blasformeinrichtungen aufweisen, um Toleranzen ausgleichen zu können.

Bei einer weiteren vorteilhaften Ausführungsform wäre es auch möglich, dass die Magazin- bzw. die Aufnahmeeinrichtung und/oder die Blasformeinrichtung in den Bereichen, in denen die Blasformeinrichtung mit den zylindrischen Öffnungen der Magazinvorrichtung in Kontakt tritt, mit Einführbereichen und insbesondere mit kegeligen Einführbereichen ausgestattet ist.

Bei einer weiteren vorteilhaften Ausführungsform weist, wie oben erwähnt, die Magazin- bzw. Aufnahmevorrichtung eine Vielzahl von Öffnungen zum Aufnehmen der einzelnen Blasformeinrichtungen auf. Dabei sind diese Öffnungen vorteilhaft zylindrisch ausgebildet. Besonders bevorzugt sind diese Öffnungen in den Magazinvorrichtungen zumindest bereichsweise aus Kunststoff ausgeführt.

Dabei ist es möglich, dass diese Öffnungen in mehreren Reihen angeordnet sind und beispielsweise zwei benachbarte Reihen gegenüber einander versetzt sind. Auf diese Weise kann die Packungsdichte der Blasformeinrichtungen erhöht werden.

Bei einer weiteren vorteilhaften Ausführungsform ist die Position der Blasformeinrichtung innerhalb der Aufnahmeeinrichtung niedriger als die Position der Blasformeinrichtung in dem Blasformträger. Auf diese Weise wird bei der Demontage der Blasformeinrichtung diese nach unten abgesenkt.

Bei einer weiteren vorteilhaften Ausführungsform weist das Magazin eine mehreckige und bevorzugt rechteckige Außenkontur auf, wobei bevorzugt die Längsseite dieser Außenkontur im Wesentlichen senkrecht zu einer gedachten radialen Verbindungslinie zwischen einem Teilkreismittelpunkt und den Blasformträgern angeordnet ist. Auf diese Weise kann die Magazineinrichtung von der Wechseleinrichtung bzw. einem Arm der Wechseleinrichtung sehr leicht erreicht werden.

Im Folgenden wird die Ausgestaltung der Blasformeinrichtung beschrieben. So ist es denkbar, dass zum Entriegeln der Blasformeinrichtungen an einem Formträger oder auch einer Formträgerschale bzw. auch beim Entriegeln eines Bodenteils der Blasformeinrichtung die Anordnung, das heißt insbesondere die Seitenteile und das Bodenteil, mechanisch miteinander verbunden werden. Es käme jedoch auch eine magnetische Verbindung in Betracht.

Vorteilhaft ist ein derartiger Fixiermechanismus, der die einzelnen Blasformteile miteinander verbindet, so ausgeführt, dass dieser nur eine Kraft in einer Zugrichtung aufweist bzw. ausführt und radial hierzu eine bestimmte Nachgiebigkeit aufweist, um Toleranzen auszugleichen. Vorteilhaft kann an den Teilen der Blasformeinrichtungen, wie etwa den Blasformhälften, ein Vorsprung, ein Nocken oder dergleichen vorgesehen sein, welcher von einem Element der Greifeinrichtung hintergriffen werden kann oder in welchen die Greifeinrichtung einfahren kann.

Bei einer weiteren vorteilhaften Ausführungsform sind die in Verbindung mit einer Greifeinrichtung stehenden Vorsprünge oder Nocken vorteilhaft radial innerhalb des durch einen Behältnismittelpunkt beschriebenen Teilkreises angeordnet. Auf diese Weise kann erreicht werden, dass diese Nocken auch im Arbeitsbetrieb nicht mit Klammern, beispielsweise eines Einlauf- und Auslaufstern in Kontakt treten können.

Bei einer weiteren vorteilhaften Ausführungsform wäre es auch möglich, dass zwischen den beiden Formschalen und einer Bodenform der Blasformeinrichtung eine formschlüssige Verbindung vorliegt, welche ein Verdrehen der Bodenform relativ zu den Seitenteilen bzw. Formschalen verhindert. Daneben wäre es auch möglich, dass die Bodenform vor dem Wechselvorgang mechanisch mit den Formhälften verbunden wird.

Zur Vereinfachung eines Belade- und Entladevorgangs wäre es möglich, dass eine Rotationsachse der Blasformeinrichtung während des Be- und Entladens (der Kunststoffbehältnisse) im Wesentlichen parallel zur Achse des Formträgers bzw. auch zu einer Drehachse des Blasrades verläuft.

In einer weiteren vorteilhaften Ausführungsform wäre es auch möglich, dass ein Schutzbereich der Blasmaschine während einer Produktion automatisch von einem Ablagebereich der Blasformen bzw. Blasformeinrichtungen getrennt wird. Eine derartige Trennung kann dabei automatisch bei einem Beginn bzw. Starten eines Formwechselvorgangs - insbesondere automatisch - durchgeführt werden.

Dabei können die Schutzbereiche so geändert werden, dass ein Maschinenbediener während der Produktion der Vorrichtung bzw. während des Arbeitsbetriebs einen Bereich der Formenablage betreten kann. So wäre es denkbar, dass beispielsweise eine elektromechanische Einheit die Position einer Umformungsstation relativ zu der Wechseleinrichtung jeweils nach der Positionierung des Blasrades bevorzugt form- und/oder kraftschlüssig sicherstellt.

Es könnte allgemein der Ablauf eines Blasformeinrichtungswechsels das Anfahren einer Zwischenstation beinhalten, an der die Blasformeinrichtung temporär geparkt bzw. abgelegt wird. In diesem Falle braucht die Halteeinrichtung nicht als Doppelgreifer ausgeführt sein und es ist dennoch eine stationsgerechte Zuordnung der Formen in einer Aufbewahrungseinrichtung wie einem Magazin möglich.

Wie oben bereits erwähnt, kann es vorteilhaft sein, wenn die Öffnungsbewegungen des Blasformträgers und des Bodens in einer Wechselposition für die Blasformeinrichtung von der im Betrieb abweicht. Dies kann beispielsweise bei einer nicht gekoppelten Formträgeransteuerung vorteilhaft sein. Auch wäre es möglich, dass ein relativ zu der in der Blasformeinrichtungswechselposition jeweils vor- bzw. nacheilenden Blasformträger der Nachbarstation ebenfalls bereichsweise weggeschwenkt wird, um für die in der Wechselposition befindliche Umformungsstation einen größeren Öffnungswinkel zu ermöglichen.

Weiterhin wäre es möglich, dass ein Fixiermechanismus für die Formschalen und die Bodenformen während eines Spannablaufs eine progressive Kennlinie aufweist. Zu Beginn eines derartigen Spannablaufs kann ein großer Hub mit einer geringen Kraft erfolgen, um möglichst große Abstände beim Einziehen überbrücken zu können. Gegen Ende des Spannablaufs wird bevorzugt eine große Kraft bei nur geringem Hub durchgeführt.

Bei einem weiteren vorteilhaften Verfahren befindet sich die Wechselposition der Blasstation und/oder das Magazin und/oder eine etwaige Zwischenposition in der die Blasformeinrichtungen zwischenzeitlich positioniert werde, in einem vorgegebenen Umfangsbereich eines Wirkkreises der Wechseleinrichtung, vorzugsweise in einem Bereich von 270° des Wirkkreises, bevorzugt in einem Bereich von 220° des Wirkkreises und besonders bevorzugt in einem Bereich von 180° des Wirkkreises

Bei einem weiteren vorteilhaften Verfahren führt die Wechseleinrichtung beim Entnehmen und/oder Anordnen der Blasformeinrichtung von den Stationen bzw. an den Blasformträgern eine relativ zu dem Teilkreis der Vorrichtung radiale Bewegung auf. Dabei kann es sich um eine rein radiale Bewegung handeln, es wäre jedoch auch denkbar, dass es sich um eine Bewegung mit einer radialen Komponente handelt.

Bei einem weiteren vorteilhaften Verfahren führt die Wechseleinrichtung beim Entnehmen und/oder Anordnen der Blasformeinrichtung von den Stationen bzw. an den Blasformträgern eine im Wesentlichen vertikale Bewegung aus. Unter im Wesentlichen wird dabei verstanden, dass die Bewegungsrichtung von der exakt vertikalen Richtung um nicht mehr als 20° bevorzugt um nicht mehr als 10° und besonders bevorzugt um nicht mehr als 5° abweicht. Weitere Vorteile und Ausführungsformen ergeben sich aus den beigefügten Zeichnungen.

Darin zeigen:
- Fig. 1: Eine schematische Darstellung einer Vorrichtung
- Fig. 2: eine Darstellung der Vorrichtung mit dargestellter Wechseleinrichtung;
- Fig. 3: eine Draufsicht auf die in Fig. 2 gezeigte Vorrichtung;
- Fig. 4: eine weitere Darstellung der in Fig. 2 gezeigten Vorrichtung;
- Fig. 5: eine weitere Darstellung der in Fig. 2 gezeigten Vorrichtung in einer weiteren Betriebsposition;
- Fig. 6: eine Darstellung einer Umformungsstation;
- Fig. 7: eine Darstellung einer Formschale für eine Blasformeinrichtung;
- Fig. 8: eine Darstellung einer Wechseleinrichtung;
- Fig. 9: eine Darstellung einer Greifeinrichtung zum Greifen einer Blasformeinrichtung;
- Fig. 10: eine Darstellung einer Wechseleinrichtung mit einer Blasformeinrichtung;
- Fig. 11: eine Darstellung zur Veranschaulichung möglicher Positionen der Wechseleinrichtung;
- Fig. 12: eine Darstellung eines Magazins mit einer Blasformeinrichtung;
- Fig. 13: eine Darstellung einer weiteren Ausführungsform der Erfindung;
- Fig. 14: eine perspektivische Ansicht der in Fig. 13 gezeigten Darstellung;
- Fig. 15: eine Darstellung eines Benutzers mit einer Blasformeinrichtung;
- Fig. 16: eine Darstellung eines Benutzers mit einer Halteeinrichtung; und
- Fig. 17: eine Darstellung einer Halteeinrichtung.

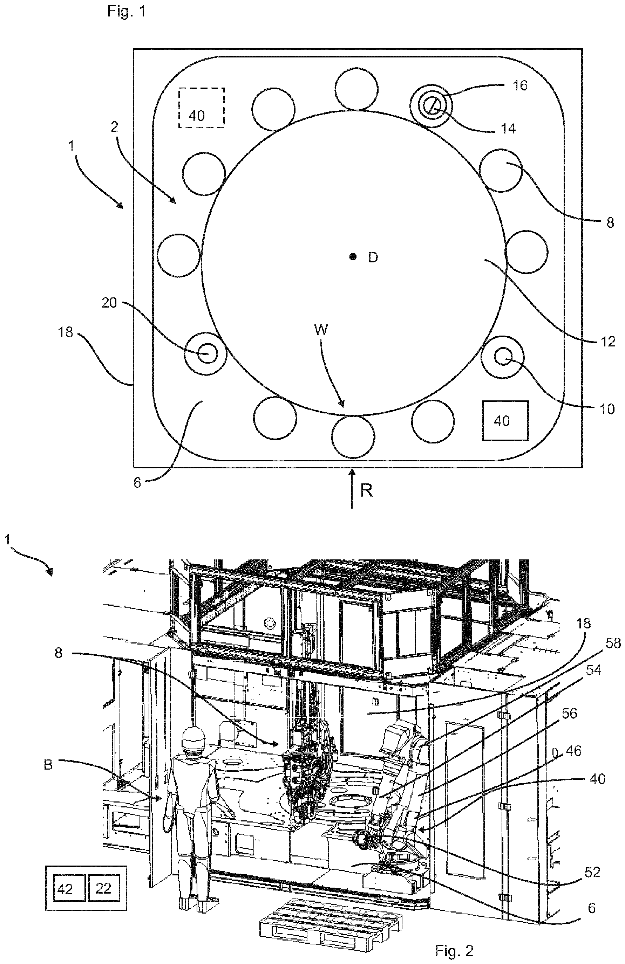

Fig. 1 zeigt eine schematische Darstellung einer Vorrichtung 1 zum Umformen von Kunststoffvorformlingen zu Kunststoffbehältnissen. Dabei werden die Kunststoffvorformlinge 10 den einzelnen Umformungsstationen 8 zugeführt und zu Kunststoffbehältnissen 20 expandiert. Nach dieser Expansion werden die Kunststoffbehältnisse wieder von der Vorrichtung entnommen. Zu diesem Zwecke kann ein Zuführstern vorgesehen sein, der die Kunststoffvorformlinge der Vorrichtung 1 zuführt sowie auf eine Abführeinrichtung, insbesondere ebenfalls ein Transportstern, der die fertiggestellten Behältnisse von der Vorrichtung abführt. Die Vorrichtung 1 weist einen Stationsträger 12 auf, an dem eine Vielzahl von Umformungsstationen 8 angeordnet ist. Dieser Stationsträger kann dabei beispielsweise, wie in Fig. 1 gezeigt, ein Blasrad sein, welches bezüglich einer Drehachse D (welche hier senkrecht zu der Figurenebene und damit vertikal verläuft) drehbar ist. Jede einzelne Umformungsstation weist dabei jeweils eine Blasformeinrichtung 14 auf. Diese Blasformeinrichtung 14 setzt sich aus zwei Seitenteilen und einem Bodenteil zusammen. Diese Blasformeinrichtungen können gemäß der Erfindung ausgewechselt werden. Die Blasformeinrichtungen 14 sind dabei an Blasformträgern 16 angeordnet und können von diesen entnommen bzw. an diesen angeordnet werden.

Das Bezugszeigen 40 kennzeichnet eine Wechseleinrichtung, welche dazu dient, die Blasformeinrichtungen von deren Blasformträgern zu entfernen oder die Blasformeinrichtungen an den Blasformträgern anzuordnen. Das Bezugszeichen 6 kennzeichnet einen Basisträger, an dem der Stationsträger 12 drehbar gelagert ist. An bzw. neben dem Basisträger 6 ist auch die Wechseleinrichtung 40 angeordnet. Damit kann die Wechseleinrichtung 40 in die Vorrichtung integriert werden. Das Bezugszeichen 18 kennzeichnet ein Gehäuse, welches zumindest teilweise den Stationsträger 12 umgibt, welches jedoch bevorzugt, wie unten gezeigt wird, auch die Wechseleinrichtung 40 einschließen bzw. einhausen kann.

Das Bezugszeichen W kennzeichnet eine Wechselposition. Wie oben erwähnt, werden die Blasformeinrichtungen bevorzugt an einer bestimmten Wechselposition eingewechselt. Dies bedeutet, dass die Umformungsstationen durch eine Drehung des Trägers 12 sukzessive in diese Wechselposition W gefahren werden können und dieser Wechselposition dann die alten Blasformeinrichtungen entnommen und bevorzugt auch neue Blasformeinrichtungen zugeführt werden können. Das Bezugszeichen R kennzeichnet eine radiale Richtung. In dieser radialen Richtung wird die Wechseleinrichtung bzw. eine Greifeinrichtung der Wechseleinrichtung bevorzugt auf die Umformungsstationen bzw. die Blasformeirnichtungen zugestellt, um diese zu wechseln.

Fig. 2 zeigt eine perspektivische Darstellung einer Vorrichtung 1, wobei hier lediglich eine Umformungseinrichtung bzw. Umformungsstation 8 dargestellt ist. Der Stationsträger an dem diese angeordnet ist, ist hier ebenfalls nicht dargestellt. Weiterhin erkennt man jedoch wieder den Basisträger 6, an den die Wechseleinrichtung 40 angeordnet ist. Diese Wechseleinrichtung 40 weist hier einen ersten schwenkbaren Arm 56 sowie einen zweiten schwenkbaren Arm 54 auf. Über eine Gelenk- und Antriebsverbindung sind diese beiden Arme schwenkbar miteinander verbunden.

Das Bezugszeichen 52 kennzeichnet eine Greifeinrichtung, welche dazu dient, um die Blasformeinrichtungen zu greifen und zu transportieren. Diese Greifeinrichtung ist dabei wiederum schwenkbar an dem zweiten Arm 54 angeordnet und bevorzugt auch drehbar. Damit ist insgesamt die Greifeinrichtung um wenigstens drei, bevorzugt um wenigstens vier Achsen im Raum schwenkbar. Daneben wäre es auch möglich, wie durch das gestrichelte Rechteck dargestellt ist, dass mehrere Wechseleinrichtungen vorgesehen sind, wobei diese insbesondere jeweils wenigstens mittelbar an dem Basisträger 6 angeordnet sind. Auf diese Weise könnten in einem Wechselbetrieb schneller die einzelnen Blasformeinrichtungen ausgewechselt werden.

Das Bezugszeichen 46 kennzeichnet schematisch eine Erfassungseinrichtung, welche auf die Wechseleinrichtung 40 bzw. die Greifeinrichtung 52 wirkende Kräfte erfasst, um so im Notfall abschalten zu können. Vorteilhaft weist die Vorrichtung mehrere derartiger Erfassungseinrichtungen auf, wobei bevorzugt jeder einzelnen Antriebseinrichtung, welche ein Bewegen der Wechseleinrichtung 40 bzw. der Greifeinrichtung 52 bewirkt, zugeordnet ist. Bei diesen Erfassungseinrichtungen kann es sich beispielsweise um Kraftmesseinrichtungen handeln, welche tatsächliche Kräfte, Drehmomente und dergleichen bestimmen. Es wäre jedoch auch möglich, dass die Kräfte aus Parametern des jeweiligen Antriebs bestimmt werden, etwa aus Strömen oder dergleichen.

Das Bezugszeichen B kennzeichnet einen Benutzer, der die Anlage bedient. Dieser kann sich vorteilhaft während eines Betriebs der Wechseleinrichtung nicht in Bereichen bewegen, welche um gekehrt von der Wechseleinrichtung 40 erreicht werden können.

Das Bezugszeichen 22 kennzeichnet eine hie nicht als erfindungsgemäß beanspruchte Steuerungseinrichtung zum Steuern der Wechseleinrichtung. Das Bezugszeichen 42 kennzeichnet eine Steuerungseinrichtung zum Steuern der Umformungseinrichtung selbst.

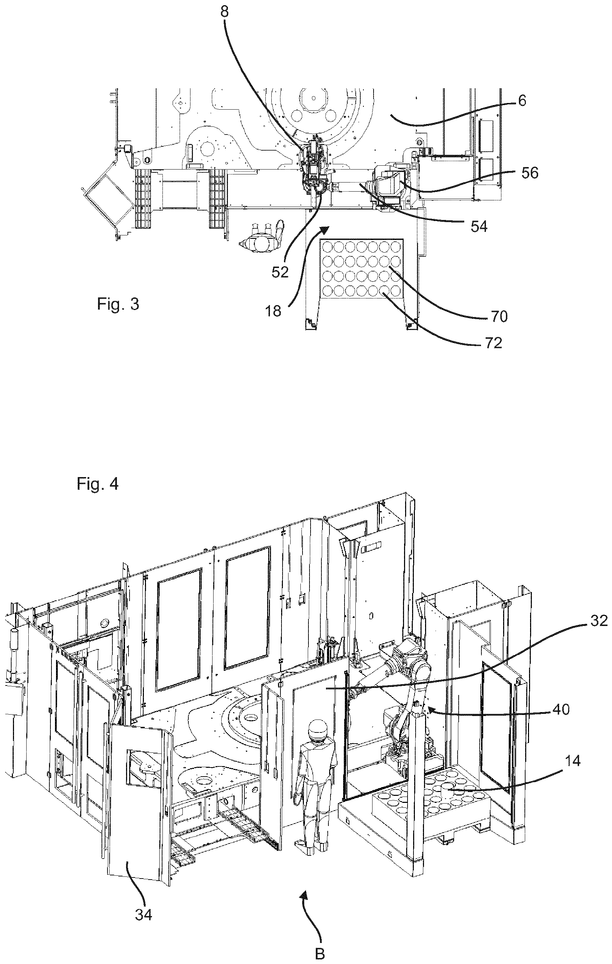

Fig. 3 zeigt eine Draufsicht auf die in Fig. 2 gezeigte Vorrichtung. Man erkennt hier, dass die Wechseleinrichtung 40 ebenfalls in das Gehäuse 18 integriert ist. Bei dem in Fig. 3 gezeigten Zustand ist der Arm 56 gerade ausgeschwenkt, sodass die Greifeinrichtung 52 gerade eine Blasformeinrichtung greifen kann.

Daneben ist auch eine Magazineinrichtung 70 dargestellt, welche eine Vielzahl von Aufnahmestellen 72 zum Aufnehmen der Blasformeinrichtungen aufweist. Diese Blasformeinrichtungen können dabei jeweils in die Aufnahmestellen bzw. Löcher 72 eingefahren werden.

Fig. 4 zeigt eine weitere Darstellung der erfindungsgemäßen Vorrichtung. Man erkennt, dass hier eine Wandung 32 vorgesehen ist, welche den Benutzer B von der Wechseleinrichtung 40 abtrennt, sodass dieser nicht verletzt werden kann. Daneben können auch weitere bewegbare Wandungsteile 34 vorgesehen sein, damit einerseits die Maschine leichter für Wartungszwecke zugänglich ist, oder andererseits auch weitere Wechseleinrichtungen vorgesehen sein können, wie auch in Fig. 1 dargestellt.

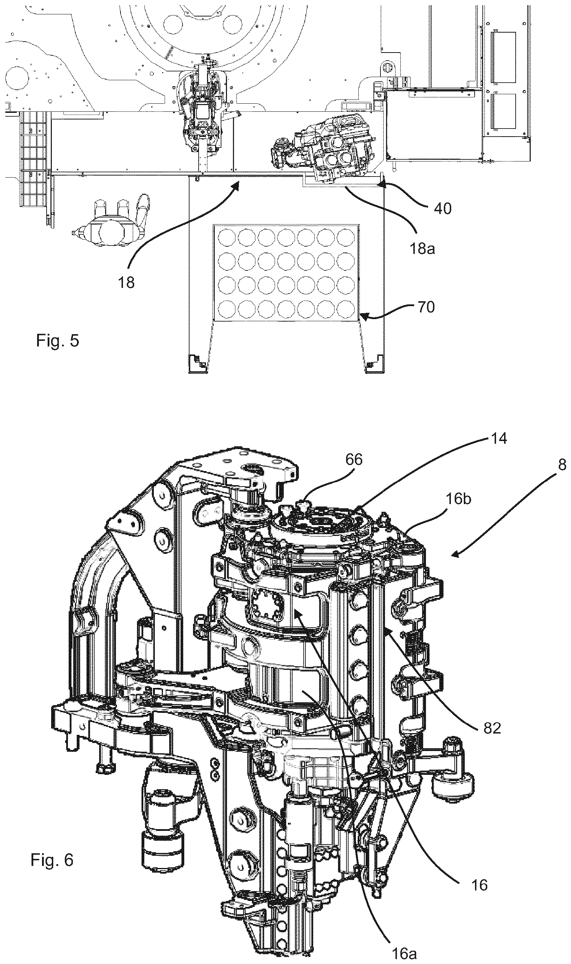

Die in Fig. 5 gezeigte Darstellung ähnelt der in Fig. 3 gezeigten Darstellung, wobei jedoch hier die Wechseleinrichtung 40 in einer anderen Betriebsposition ist. Hier kann es sich beispielweise um einen Arbeitsbetrieb handeln, bei dem die Vorrichtung Kunststoffvorformlinge zu Kunststoffbehältnissen umformt. Man erkennt, dass in dem Gehäuse 18 eine Ausnehmung 18a angeordnet sein kann, welche auch zum vollständigen Aufnehmen der Wechseleinrichtung 40 dient. Bei dem in Fig. 5 gezeigten Zustand können die einzelnen Arme der Wechseleinrichtung 40 so eingeklappt sein, dass die Wechseleinrichtung 40 einen nur geringen Platz einnimmt.

Fig. 6 zeigt eine Darstellung einer Umformungsstation 8. Man erkennt hier den Blasformträger 16, der zwei Blasformträgerteile 16a, 16b aufweisen kann, die auseinandergeschwenkt werden können, um die Blasformeinrichtung 14 zu öffnen und zu schließen. Auch für den Wechselbetrieb können die beiden Blasformträgerteile 16a, 16b auseinandergeschwenkt werden, um die Blasformeinrichtung 14 entnehmen zu können.

Das Bezugszeichen 82 kennzeichnet in seiner Gesamtheit eine Verriegelungseinrichtung, welche im Arbeitsbetrieb die beiden Blasformträgerteile 16a und 16b miteinander verriegelt, sodass auch bei größeren Drücken diese nicht auseinanderschwenken. Das Bezugszeichen 66 bezieht sich auf einen Vorsprung, der jeweils an den beiden Seitenteilen der Blasformeinrichtung 14 angeordnet ist. Dieser Vorsprung ist dabei so stabil ausgeführt, dass die gesamte Blasformeinrichtung 14 an diesem Vorsprung getragen werden kann. Dieser Vorsprung 66 kann dabei von der Greifeinrichtung bzw. einem Bestandteil der Greifeinrichtung hintergriffen werden, sodass die Greifeinrichtung 52 die Blasformeinrichtung über diesen Vorsprung tragen kann. Über ein Halten der jeweiligen Seitenteile der Blasformeinrichtung an den Vorsprüngen 66 kann auch die Blasformeinrichtung in ihrer Gesamtheit zusammengehalten werden.

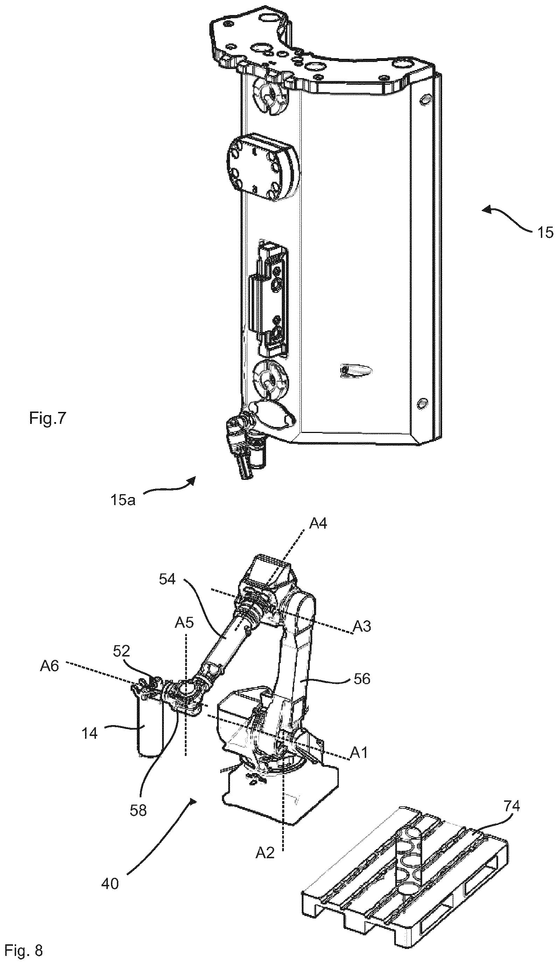

Fig. 7 kennzeichnet eine Blasformträgerschale. Diese Blasformträgerschale 15 kann an den Blasformträger 16 angeordnet sein und wiederum selbst die Blasformeinrichtung bzw. Teile der Blasformeinrichtung aufnehmen. Dabei können Zuführ- und Abführelemente 15a vorgesehen sein, um der Blasformschale 15 Medien, wie beispielsweise Temperiermedien zuzuführen.

Fig. 8 zeigt eine weitere Darstellung der Wechseleinrichtung 40. Dabei ist wiederum der erste Arm 56 dargestellt, der bezüglich einer ersten Achse A1 schwenkbar ist. Daneben ist jedoch dieser Arm 56 auch bezüglich einer zweiten Achse A2 drehbar. An diesen ersten Arm 56 ist ein zweiter Arm 54 angeordnet und dabei ist der Arm 54 bezüglich einer Achse A3 gegenüber dem ersten Arm 56 schwenkbar. Hier sind die beiden Achsen A1 und A3 parallel zueinander. Diese Achsen können jedoch auch schräg bzw. windschief zueinander angeordnet sein. Daneben ist der zweite Arm 54 auch bezüglich einer vierten Achse A4 drehbar.

Zur Erreichung dieser jeweiligen Schwenk- und Drehbewegung bezüglich der einzelnen Achsen und auch bezüglich der weiteren noch zu beschreibenden Achsen sind jeweils Antriebseinrichtungen, wie insbesondere, aber nicht ausschließlich, elektromotorische Antriebe, vorgesehen. Daneben wäre jedoch auch die Verwendung von pneumatischen und/oder hydraulischen Antrieben denkbar. An dem zweiten Arm 54 ist eine Greifeinrichtung 52 vorgesehen, welche zum Greifen der Blasformeinrichtung dient. Dieses Greifelement ist dabei bezüglich einer Achse A5 gegenüber dem Arm 54 schwenkbar. Diese Achse A5 kann hier senkrecht zu der Achse A3 und/oder auch senkrecht zu der Achse A4 stehen. Daneben ist die Greifeinrichtung über einen Träger 58 an den Arm 54 angeordnet. Die Greifeinrichtung selbst kann wiederum gegenüber diesem Träger 58 bezüglich einer Achse A6 drehbar sein. Mittels dieser Vielzahl von Bewegungen können die Blasformeinrichtungen 14 von der einzelnen Umformungsstation abgenommen und auf einen Träger 74, der hier als Europalette dargestellt ist, gestellt werden. Es wäre jedoch auch möglich, die Blasformeinrichtungen 14 direkt in vorgesehene Öffnungen eines Magazins einzubringen.

Ein Abstand zwischen der Magazineinrichtung oder der Palette 74 und der Wechseleinrichtung 40 kann dabei zwischen 1 Meter und 2 Metern liegen. Auch ein entsprechender Aktionsradius der Wechseleinrichtung kann in einem Bereich von 1,5 Metern liegen.

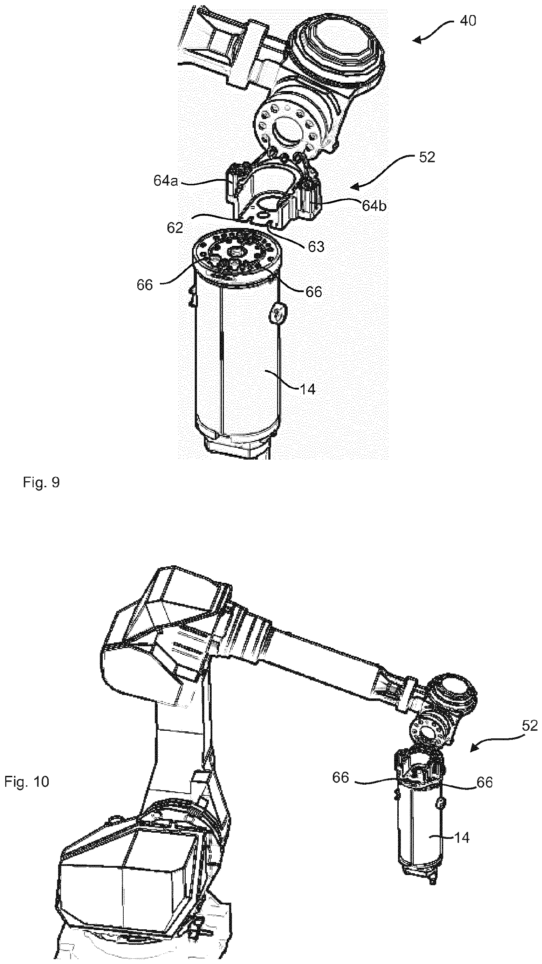

Fig. 9 zeigt eine Detaildarstellung der Wechseleinrichtung 40 bzw. deren Greifeinrichtung 52. Diese Greifeinrichtung kann dabei ein Führungselement 62 aufweisen, welches über eine entsprechende Oberfläche der Blasformeinrichtung geführt werden kann. Daneben können auch Vorsprünge 64a, 64b vorgesehen sein, welche zum Zentrieren der Wechseleinrichtung 40 bzw. genauer der Greifeinrichtung gegenüber der Umformungsstation dienen. Das Bezugszeichen 63 bezieht sich auf eine in dem Führungselement 62 angeordnete Ausnehmung, welche zum Wechseln der Blasformeinrichtung die Vorsprünge hintergreifen kann. Damit dient das Führungselement 62 auch zum Tragen der Blasformeinrichtung 14.

Fig. 10 zeigt eine Darstellung der Wechseleinrichtung mit einer daran angeordneten Blasformeinrichtung 14. Man erkennt, dass der Greifarm 52 hier in zwei Vorsprünge 66, die an der Blasformeinrichtung 14 angeordnet sind, eingreift und diese zusammendrückt, sodass auf diese Weise die Blasformeinrichtung zusammengehalten wird. Damit dienen die auch in Fig. 9 und Fig. 6 gezeigten Vorsprünge 66, die an der Blasformeinrichtung 14 angeordnet sind, zum Zusammenhalten derselben während deren Transports. Damit greift vorteilhaft die Greifeinrichtung 52 oberhalb der Blasformeinrichtung 14 in Elemente derselben ein, um diese zu halten. Diese Art des Eingreifens in die Blasformeinrichtung eignet sich in besonderer Weise, da die Blasformeinrichtung, wie auch in Fig. 6 gezeigt, über ihren Träger hinaussteht und auf diese Weise auch in einem geschlossenen Zustand des Blasformträgers 16 gegriffen werden kann. So ist es möglich, dass die Wechseleinrichtung zunächst die Blasformeinrichtung 14 über deren Vorsprünge 66 greift und erst anschließend der Blasformträger geöffnet. Auf diese Weise kann sichergestellt werden, dass die Blasformeinrichtung zu jedem Zeitpunkt sicher gehalten wird.

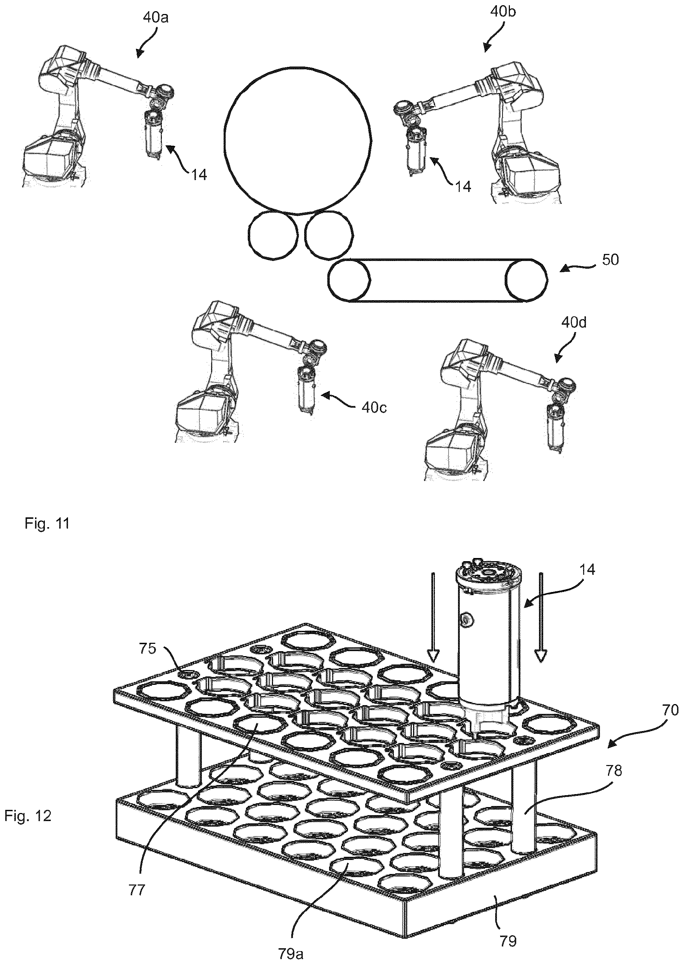

Fig. 11 zeigt eine weitere Darstellung der vorliegenden Erfindung. Hier sind mehrere Wechseleinrichtungen 40a - 40d vorgesehen, mit denen jeweils Elemente der Vorrichtung gewechselt werden können. Dabei wäre es beispielsweise möglich, dass zwei der Wechseleinrichtungen (40a, 40b) vorgesehen sind, um Blasformeinrichtungen 14 zu wechseln, dass aber auch weitere Wechseleinrichtungen vorgesehen sind, die andere Elemente auswechseln, wie beispielsweise Heizdorne, die sich in einem Ofen 50 zum Erwärmen der Kunststoffvorformlinge befinden (die Wechseleinrichtung 40d). Daneben können mit der gezeigten Wechseleinrichtung 40c beispielsweise auch Halteelemente, wie Transferzangen, gewechselt werden, welche die Kunststoffvorformlinge nach ihrer Erwärmung zu der Umformungseinrichtung 1 transportieren.

Fig. 12 zeigt eine Aufnahmeeinrichtung wie ein Magazin zum Aufnehmen der Blasformeinrichtungen 14. Dieses kann dabei eine Trägerplatte 75 enthalten, welche eine Vielzahl von Öffnungen 77 aufweist. Mittels Trägern 78 kann diese Platte 75 an einen Bodenträger 79 angeordnet sein, wobei dieser Bodenträger 79 wiederum Öffnungen 79a bzw. Löcher zum Aufnehmen der Blasformeinrichtungen aufweist. Vorteilhaft weist dieses Magazin die gleichen Abmessungen auf, wie eine sogenannte Europalette und damit vorzugsweise Abmessungen in einem Bereich von 1200 x 800 mm. Die einzelnen Öffnungen 79a sind dabei, wie in Fig. 12 gezeigt, in Reihen angeordnet und gegeneinander versetzt, sodass eine möglichst große Anzahl an Blasformeinrichtungen in die Palette eingebracht werden kann.

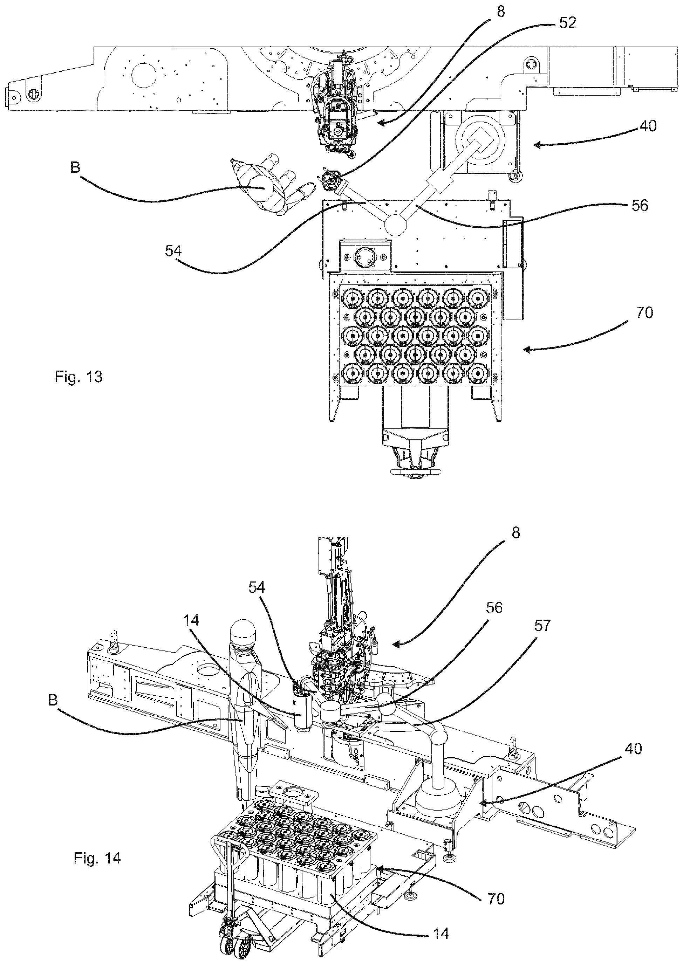

Fig. 13 und 14 zeigen eine Darstellung einer Vorrichtung bei welcher die Wechseleinrichtung 40 als sog. Manipulator ausgestaltet ist, welcher von einem Benutzer B bedient werden kann. Auch hier weist dieser Manipulator 40 eine Greifeinrichtung 52 an, welche zum Halten der Blasformeinrichtung 14 dient. Diese Greifeinrichtung 52 ist an einem Arm 54 angeordnet und dieser Arm wiederum an einem Arm 56. Das Bezugszeichen 57 kennzeichnet einen weiteren Arm, an dem der Arm 65 angeordnet ist.

Der Benutzer kann zum Wechseln der Blasformeinrichtungen die Greifeinrichtung 52 an die Umformungseinrichtung 8 heranführen und mit der Blasformeinrichtung verbinden. Anschließend kann der Benutzer B die Blasformeinrichtung 14 mittels der Wechseleinrichtung 40 zu dem Magazin bewegen und dort ablegen.

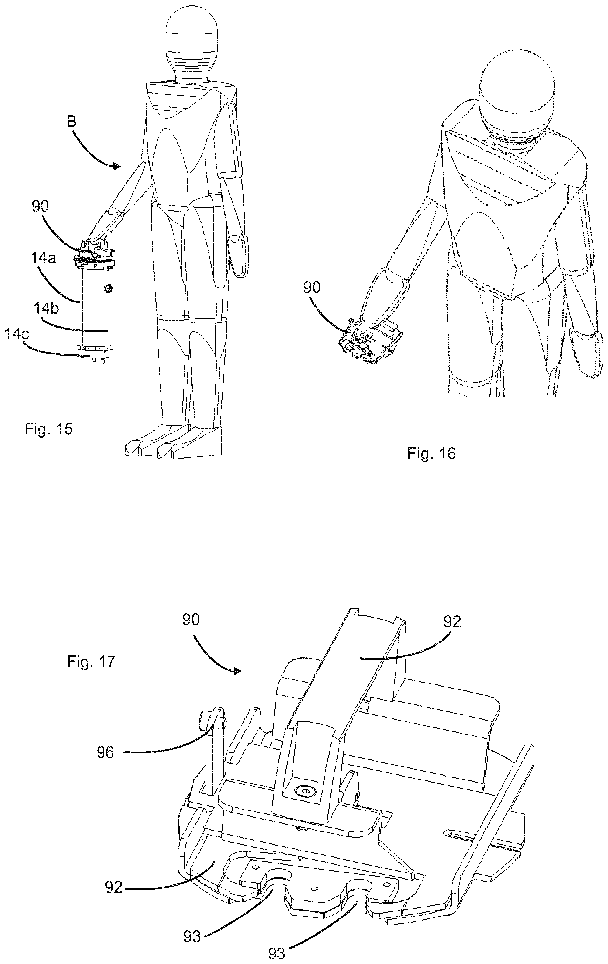

Fig. 15 zeigt eine Darstellung eines Benutzers, der eine Blasformeinrichtung 14 trägt. Dabei kennzeichnen die Bezugszeichen 14a, 14b, und 14c die einzelnen Bestandteile der Blasformeinrichtung, nämlich deren Seitenteile sowie das Bodenteil (14c). Das Bezugszeichen 90 kennzeichnet eine Halteeinrichtung, welche zum Halten der Blasformeinrichtung dient. Diese Halteeinrichtung 90 kann dabei derart gestaltet sein, dass sie einerseits mit einer Wechseleinrichtung verbindbar ist, andererseits jedoch auch von dem Benutzer B gehalten werden kann.

Fig. 16 zeigt einen Benutzer B der lediglich die Halteeinrichtung 90 hält. Fig. 17 zeigt eine Detaildarstellung einer Halteeinrichtung 90. Diese Halteeinrichtung 90 weist dabei ein Griffelement 98 auf, mittels dessen es von einem Benutzer B gegriffen werden kann. Daneben weist die Halteeinrichtung 90 wieder die beiden Ausnehmungen auf, welche in die hierzu korrespondierenden Vorsprünge der Blasformeinrichtung eingreifen können. Das Bezugszeichen 96 kennzeichnet ein Hebelelement, mittels dessen ein Eingriff in die Blasformeinrichtung hergestellt bzw. gelöst werden kann. Dabei ist es möglich, dass eine Trägerplatte 92 in Reaktion auf eine Bewegung dieses Hebelelements verschoben wird, um die Ausnehmungen 93 freizugeben oder zu sperren.

Auf diese Weise kann der Benutzer mittels der Halteeinrichtung 90 die Blasformeinrichtung 14 greifen, zu dem Magazin 70 bewegen und dort nach dem Ablegen der Blasformeinrichtung den Eingriff wieder lösen.

### Bezugszeichenliste

- 1: Vorrichtung / Umformungseinrichtung
- 6: Basisträger
- 8: Umformungsstationen
- 10: Kunststoffvorformlinge
- 12: Stationsträger
- 14: Blasformeinrichtung
- 14a, b, c: Bestandteile der Blasformeinrichtung
- 15: Blasformschale
- 15a: Zu- und Abführelement für Temperiermedium
- 16: Blasformträger
- 16a 16b: Blasformträgerteile
- 18: Gehäuse
- 18a: Ausnehmung
- 20: Kunststoffbehältnisse
- 22: Steuerungseinrichtung zum Steuern der Wechseleinrichtung
- 32: Wandung
- 34: Wandungsteile
- 40: Wechseleinrichtung
- 40a-40d: Wechseleinrichtung
- 42: Steuerungseinrichtung zum Steuern der Umformungseinrichtung
- 46: Erfassungseinrichtung
- 50: Ofen
- 52: Greifeinrichtung
- 54: zweiter schwenkbarer Arm
- 56: erster schwenkbarer Arm
- 57: dritter schwenkbarer Arm
- 58: Träger
- 62: Führungselement
- 63: Ausnehmung
- 64a, 64b: Vorsprünge
- 66: Vorsprünge
- 70: Magazineinrichtung
- 72: Löcher
- 74: Träger / Palette
- 75: Trägerplatte
- 77: Öffnungen
- 78: Träger
- 79: Bodenträger
- 79a: Öffnungen / Löcher
- 82: Verriegelungseinrichtung
- 90: Halteeinrichtung
- 92: Trägerplatte
- 93: Ausnehmung
- 96: Hebelelement
- 98: Griffelement

- D: Drehachse
- B: Benutzer
- A1 - A6: Achsen
- W: Wechselposition
- R: radiale Richtung

## Patentansprüche

1. Vorrichtung zum Umformen von Kunststoffvorformlingen (10) zu Kunststoffbehältnissen (20) mit einer Transporteinrichtung (2), welche die Kunststoffvorformlinge (10) entlang eines vorgegebenen Transportpfads transportiert, wobei die Transporteinrichtung (2) einen beweglichen und zumindest mittelbar an einem stationären Basisträger (6) angeordneten Stationsträger (12) aufweist, an dem eine Vielzahl von Umformungsstationen (8) angeordnet ist, wobei diese Umformungsstationen (8) jeweils Blasformeinrichtungen (14) aufweisen, welche jeweils Hohlräume ausbilden, innerhalb derer die Kunststoffvorformlinge (10) zu den Kunststoffbehältnissen umformbar sind und diese Blasformeinrichtungen jeweils an Blasformträgern (16) angeordnet sind,
wobei
die Vorrichtung (1) eine manuelle Wechseleinrichtung (40) aufweist, welche geeignet und dazu bestimmt ist, in einem Wechselbetriebsmodus der Vorrichtung zumindest die Blasformeinrichtungen von deren Blasformträgern (16) zu entfernen und/oder Blasformeinrichtungen an den Blasformträgern (16) anzuordnen,
**dadurch gekennzeichnet, dass**
die Wechseleinrichtung (40) weiterhin dazu geeignet und bestimmt ist, während eines weiteren Betriebsmodus, der sich von dem Wechselbetrieb unterscheidet, einen Behandlungsvorgang an wenigstens einem für die Vorrichtung (1) bestimmten Arbeitselement durchzuführen, und weiter
wobei die manuelle Wechseleinrichtung (40) ein Manipulator ist, wobei der Manipulator dazu eingerichtet und dafür vorgesehen ist, ein Eigengewicht der zu bewegenden Blasformeinrichtungen zu kompensieren, wobei
an einem Ende der manuellen Wechseleinrichtung (40) eine Greifeinrichtung (52) zum Greifen der zu bewegenden Blasformen befestigt ist,
die manuelle Wechseleinrichtung dazu eingerichtet und dafür vorgesehen ist, von einem Bediener geführt zu werden,
die manuelle Wechseleinrichtung dazu eingerichtet und dafür vorgesehen ist, dass die Blasformeinrichtung als ein Formenpaket, das heißt insbesondere einschließlich sämtlicher Teile der Blasform, ausgetauscht wird, und weiter und wobei
die Greifeinrichtung (52) in wenigstens zwei unterschiedliche Richtungen beweglich ist.

2. Vorrichtung nach dem vorhergehenden Anspruch,
**dadurch gekennzeichnet, dass**
das Formenpaket Blasformhälften und einen Boden umfasst, wobei das Formenpaket frei von Griffen oder Ähnlichem zum Greifen des Formenpakets ist.

3. Vorrichtung nach wenigstens einem der vorangegangenen Ansprüche,
**dadurch gekennzeichnet, dass**
die Wechseleinrichtung wenigstens eine Behandlungseinrichtung zum Behandeln des Arbeitselements aufweist.

4. Vorrichtung (1) nach wenigstens einem der vorangegangenen Ansprüche,
**dadurch gekennzeichnet, dass**
der Behandlungsvorgang aus einer Gruppe von Behandlungsvorgängen ausgewählt ist, welche Reinigungsvorgänge, Wartungsvorgänge, Sterilisationsvorgänge, Kombinationen hieraus und dergleichen enthält.

5. Vorrichtung (1) nach wenigstens einem der vorangegangenen Ansprüche,
**dadurch gekennzeichnet, dass**
das Arbeitselement aus einer Gruppe von Arbeitselementen ausgewählt ist, welche Blasformen, Greifelemente, Haltedorne zum Halten der Behältnisse, Reckstangen, Blasdüsen, Füllventile und dergleichen enthält.

6. Vorrichtung (1) nach Anspruch 3,
**dadurch gekennzeichnet, dass**
die Behandlungseinrichtung durch die Greifeinrichtung austauschbar ist.

7. Vorrichtung (1) nach wenigstens einem der vorangegangenen Ansprüche,
**dadurch gekennzeichnet, dass**
die Greifeinrichtung (52) an einem um wenigstens eine vorgegebene Schwenkachse (A3, A4) schwenkbaren Arm (54) angeordnet ist.

8. Vorrichtung (1) nach wenigstens einem der vorangegangenen Ansprüche,
**dadurch gekennzeichnet, dass**
die Vorrichtung ein zumindest den Stationsträger und die Blasformeinrichtungen wenigstens teilweise umgebendes Gehäuse aufweist und die Wechseleinrichtung ausserhalb dieses Gehäuses angeordnet ist.

9. Verfahren zum Betreiben einer Umformungseinrichtung (1) zum Umformen von Kunststoffvorformlingen (10) zu Kunststoffbehältnissen (20), wobei in einem Arbeitsbetrieb der Vorrichtung (1) die Kunststoffvorformlinge (10) mittels einer Vielzahl von Umformungsstationen (8) entlang eines vorgegebenen Transportpfads transportiert werden und durch Beaufschlagung mit einem fließfähigen Medium zu den Kunststoffbehältnissen (20) expandiert werden, wobei zum Expandieren der Kunststoffvorformlinge (10) Blasformeinrichtungen (14) verwendet werden, in deren Inneren die Kunststoffvorformlinge (10) zu den Kunststoffbehältnissen (20) expandiert werden, wobei in einem Wechselbetrieb zumindest eine der Blasformeinrichtungen (14) der Vorrichtung (1) entnommen wird und/oder eine der Blasformeinrichtungen (14) an einem Blasformträger (16) der Vorrichtung (1) angeordnet wird,
wobei
zum Wechseln der Blasformeinrichtungen (14) eine manuelle Wechseleinrichtung (40) verwendet wird, welche eine Greifeinrichtung (52) zum Greifen der Blasformeinrichtung (14) aufweist,
**dadurch gekennzeichnet, dass**
die Wechseleinrichtung (40) in einem weiteren Betriebsmodus einen weiteren Behandlungsvorgang durchführt, wobei die manuelle Wechseleinrichtung (40) ein Manipulator ist, wobei der Manipulator dazu eingerichtet und dafür vorgesehen ist, ein Eigengewicht der zu bewegenden Blasformeinrichtungen zu kompensieren, wobei
an einem Ende der manuellen Wechseleinrichtung (40) eine Greifeinrichtung (52) zum Greifen der zu bewegenden Blasformen befestigt ist,
die manuelle Wechseleinrichtung von einem Bediener geführt wird,
die manuelle Wechseleinrichtung die Blasformeinrichtung als ein Formenpaket, das heißt insbesondere einschließlich sämtlicher Teile der Blasform, austauscht, und weiter und wobei
die Greifeinrichtung (52) sich in wenigstens zwei unterschiedliche Richtungen bewegt.

## Claims

1. System for transforming plastic parisons (10) to plastic containers (20) with a transport device (2) which transports the plastic parisons (10) along a predetermined transport path, wherein the transport device (2) has a movable station support (12) arranged at least indirectly on a stationary base support (6) on which a plurality of transforming stations (8) is arranged, wherein these transforming stations (8) each have blow mould devices (14) which each form cavities within which the plastic parisons (10) can be transformed into the plastic containers and these blow mould devices are each arranged on blow mould supports (16), wherein the system (1) has a manual changing device (40) which is suitable and intended to, in a changing mode of the system, at least to remove the blow mould devices from their blow mould supports (16) and/or to arrange blow mould devices on the blow mould supports (16),
**characterized in that**
during a further mode of operation which differs from the changing mode, the changing device (40) is further suitable and intended for carrying out a treatment operation on at least one working element intended for the system (1), and further
wherein the manual changing device (40) is a manipulator, wherein the manipulator is suitable and intended to compensate a dead weight of the blow mould devices to be moved, wherein
a gripping device (52) for gripping the blow moulds to be moved is attached to one end of the manual changing device (40),
the manual changing device is suitable and intended to be guided by an operator,
the manual changing device is suitable and intended to exchange the blow mould device as a mould package, i.e. in particular including all parts of the blow mould, and further and wherein
the gripping device (52) is movable in at least two different directions.

2. System according to the preceding claim,
**characterized in that**
the mould package comprises blow mould halves and a base, wherein the mould package being free of handles or the like for gripping the mould package.

3. System according to at least one of the preceding claims,
**characterized in that**
the changing device has at least one treatment device for treating the working element.

4. System (1) according to at least one of the preceding claims,
**characterized in that**
the treatment operation is selected from a group of treatment operations which includes cleaning operations, maintenance operations, sterilising operations, combinations thereof and the like.

5. System (1) according to at least one of the preceding claims,
**characterized in that**
the working element is selected from a group of working elements which includes blow moulds, gripping elements, holding mandrels for holding the containers, stretching rods, blow moulding dies, filling valves and the like.

6. System (1) according to claim 3,
**characterized in that**
the treatment device can be replaced by the gripping device.

7. System (1) according to at least one of the preceding claims,
**characterized in that**
the gripping device (52) is arranged on an arm (54) which can swivel about at least one predetermined swivel axis (A3, A4).

8. System (1) according to at least one of the preceding claims,
**characterized in that**
the system has a housing which at least partially surrounds at least the station support and the blow mould devices and the changing device is disposed outside this housing.

9. Method for operating a transforming device (1) for transforming plastic parisons (10) to plastic containers (20), wherein in a working operation of the system (1) the plastic parisons (10) are transported by means of a plurality of transforming stations (8) along a predetermined transport path and are expanded by application of a flowable medium to form the plastic containers (20), wherein for expanding the plastic parisons (10) blow mould devices (14) are used, in the interior of which the plastic parisons (10) are expanded to form the plastic containers (20), wherein in a changing mode at least one of the blow mould devices (14) of the system (1) is removed and/or one of the blow mould devices (14) is arranged on a blow mould support (16) of the system (1),
wherein for changing the blow mould devices (14) a manual changing device (40) is used which has a gripping device (52) for gripping the blow mould device (14),
**characterized in that**
in a further mode of operation the changing device (40) carries out a further treatment operation, wherein the manual changing device (40) is a manipulator, wherein the manipulator is suitable and intended to compensate a dead weight of the blow mould devices to be moved, wherein
a gripping device (52) for gripping the blow moulds to be moved is attached to one end of the manual changing device (40),
the manual changing device is guided by an operator,
the manual changing device exchanges the blow mould device as a mould package, i.e. in particular including all parts of the blow mould, and further and wherein
the gripping device (52) is moving in at least two different directions.

## Revendications

1. Dispositif pour transformer des préformes en matière plastique (10) en contenants en matière plastique (20), pourvu d'un dispositif de transport (2), lequel transporte les préformes en matière plastique (10) le long d'un chemin de transport prédéfini, dans lequel le dispositif de transport (2) présente un support de postes (12) mobile et agencé au moins indirectement sur un support de base (6) fixe et sur lequel sont agencés une pluralité de postes de façonnage (8), dans lequel ces postes de façonnage (8) présentent respectivement des dispositifs de moulage par soufflage (14), lesquels constituent respectivement des cavités à l'intérieur desquelles les préformes en matière plastique (10) peuvent être transformées en contenants en matière plastique et ces dispositifs de moulage par soufflage sont agencés respectivement sur des supports de moule de soufflage (16),
dans lequel le dispositif (1) présente un dispositif de changement (40), lequel est adapté et destiné, lorsque le dispositif est en mode changement, à retirer au moins les dispositifs de moulage par soufflage de leurs supports de moule de soufflage (16) et/ou à agencer les dispositifs de moulage par soufflage sur les supports de moule de soufflage (16),
**caractérisé en ce que**
le dispositif de changement (40) est adapté et destiné en outre, pendant un autre mode de fonctionnement qui se différencie du mode changement, à effectuer un processus de traitement sur au moins un élément de travail destiné au dispositif (1), et en outre
dans lequel dispositif de changement (40) manuel est un manipulateur, dans lequel le manipulateur est adapté à et prévu pour compenser un poids propre des dispositifs de moulage par soufflage à déplacer, dans lequel
un dispositif de préhension (52) est fixé à une extrémité du dispositif de changement (40) manuel pour saisir les moules de soufflage à déplacer, le dispositif de changement manuel est adapté à et prévu pour être guidé par un opérateur,
le dispositif de changement manuel est adapté et destiné à ce que le dispositif de moulage par soufflage soit échangé sous la forme d'un paquet de moules, c'est-à-dire en particulier en incluant toutes les parties du moule de soufflage, et en outre et dans lequel
le dispositif de préhension (52) est mobile dans au moins deux directions différentes.

2. Dispositif selon la revendication précédente,
**caractérisé en ce que**
le paquet de moules comprend des moitiés de moule de soufflage et un fond, le paquet de moules étant exempt de poignées ou similaires pour saisir le paquet de moules.

3. Dispositif selon au moins l'une des revendications précédentes,
**caractérisé en ce que**
le dispositif de changement présente au moins un dispositif de traitement destiné à traiter l'élément de travail.

4. Dispositif selon au moins l'une des revendications précédentes,
**caractérisé en ce que**
le processus de traitement est choisi dans un groupe de processus de traitement contenant des processus de nettoyage, des processus d'entretien, des processus de stérilisation, des combinaisons de ceux-ci et similaire.

5. Dispositif selon au moins l'une des revendications précédentes,
**caractérisé en ce que**
l'élément de travail est choisi dans un groupe d'éléments de travail contenant des moules de soufflage, des éléments de préhension, des mandrins de retenue destinés à retenir les contenants, des tiges d'étirage, des buses de soufflage, des soupapes de remplissage et similaire.

6. Dispositif (1) selon la revendication 3,
**caractérisé en ce que**
le dispositif de traitement peut être remplacé au moyen du dispositif de préhension.

7. Dispositif (1) selon au moins l'une des revendications précédentes,
**caractérisé en ce que**
le dispositif de préhension (52) est agencé sur un bras (54) pouvant pivoter autour d'au moins un axe de pivotement (A3, A4) prédéfini.

8. Dispositif (1) selon au moins l'une des revendications précédentes,
**caractérisé en ce que**
le dispositif présente un boîtier entourant au moins en partie au moins le support de postes et les dispositifs de moulage par soufflage et le dispositif de changement est agencé à l'extérieur de ce boîtier.

9. Procédé pour faire fonctionner un dispositif de façonnage (1) destiné à transformer des préformes en matière plastique (10) en contenants en matière plastique (20), dans lequel, lorsque le dispositif (1) se trouve en mode travail, les préformes en matière plastique (10) sont transportées le long d'un chemin de transport prédéfini et sont élargies en contenants en matière plastique (20) en étant sollicitées par un milieu coulant au moyen d'une pluralité de postes de façonnage (8), dans lequel, pour l'élargissement des contenants en matière plastique (10), des dispositifs de moulage par soufflage (14) sont utilisés, à l'intérieur desquels les préformes en matière plastique (10) sont élargies en contenants en matière plastique (20), dans lequel, en mode changement, au moins un des dispositifs de moulage par soufflage (14) est retiré du dispositif (1) et/ou un des dispositifs de moulage par soufflage (14) est agencé sur un support de moule de soufflage (16) du dispositif (1),
dans lequel un dispositif de changement (40), lequel présente un dispositif de préhension (52) destiné à saisir le dispositif de moulage par soufflage (14), est utilisé pour le changement des dispositifs de moulage par soufflage (14),
**caractérisé en ce que**
le dispositif de changement (40) effectue un autre processus de traitement au cours d'un autre mode de fonctionnement, dans lequel le dispositif de changement (40) manuel est un manipulateur, dans lequel le manipulateur est adapté à et prévu pour compenser un poids propre des dispositifs de moulage par soufflage à déplacer, dans lequel
un dispositif de préhension (52) est fixé à une extrémité du dispositif de changement (40) manuel pour saisir les moules de soufflage à déplacer, le dispositif de changement manuel est guidé par un opérateur,
le dispositif de changement manuel échange le dispositif de moulage par soufflage par un paquet de moules, c'est-à-dire en particulier en incluant toutes les parties du moule de soufflage, et en outre et dans lequel
le dispositif de préhension (52) est mobile dans au moins deux directions différentes.
